# EUROPEAN PATENT SPECIFICATION

(11) **EP 2 184 217 B1**
(45) Date of publication and mention of the grant of the patent: **16.05.2012**
(21) Application number: 09174898.8
(22) Date of filing: 03.11.2009
(51) Int. Cl.: B62D 5/04, B62D 6/00, B62D 101/00, B62D 117/00, B62D 119/00

(54) **Electrical power steering control device**
Elektrische Servolenkungsregelvorrichtung
Dispositif de commande de direction assistée électrique

(30) Priority: 06.11.2008 JP 2008285187
(43) Date of publication of application: 12.05.2010
(73) Proprietor: OMRON Automotive Electronics Co., Ltd., Komaki, Aichi 485-0802 (JP)
(72) Inventor: Endo, Go, Kyoto-shi, Kyoto 600-8530 (JP); Kuratani, Shinichi, Kyoto-shi, Kyoto 600-8530 (JP); Nakamura, Takenobu, Kyoto-shi, Kyoto 600-8530 (JP); Yabuguchi, Michisada, Kyoto-shi, Kyoto 600-8530 (JP)
(74) Representative: Wilhelms · Kilian & Partner Patentanwälte

(56) References cited:
- JP-A- 2007 276 708
- JP-B- 3 222 506

## Description

### BACKGROUND OF THE INVENTION.

### 1. TECHNICAL FIELD

The present invention relates to an electrical power steering control device used in an electrical power steering system.

### 2. RELATED ART

An electrical power steering system is a system for assisting steering of a steering wheel of a driver by applying an assisting force to an electrical motor when steering a steering wheel configuring a steering mechanism in an automobile. The driver can steer the steering wheel with a light force according to such a system.

In such an electrical power steering system, steering angular velocity data corresponding to a steering angle based on output from a steering angle sensor and vehicle speed data based on output from a vehicle speed sensor are stored over predetermined number of times within a predetermined time, the upper limit and the lower limit of the stored data are deleted, and then an average speed and an average steering angular velocity are calculated based on the remaining data in Japanese Patent No. 3222506 in order to obtain satisfactory steering feeling of the steering wheel. The calculated average speed and the average steering angular velocity are compared with a standard steering pattern stored in advance to determine the property of the driver, and an electrical motor is controlled by a controlled having a standard assist pattern based on such determination to exhibit the assisting force.

In Japanese Patent No. 3809594, an assist current value is determined by output of a torque sensor for detecting a steering torque of a steering wheel and output of a vehicle speed sensor for detecting a vehicle speed, and a differentiating amount of the output of the torque sensor is multiplied to a differential gain determined by the output of the torque sensor and the vehicle speed, the differential gain being small in neutral time when the vehicle speed is zero and becoming lager as the steering torque increases in a range of a predetermined steering torque, to determine a differential command value. An assist motor is driven to add the assist torque to the steering torque by adding the differential command value to the assist current value.

In Japanese Unexamined Patent Publication No. 2007-276708, in order to accurately recognize the operation sense felt by a driver, a sensitivity region serving as a region of each sensitivity index is set in a two-dimensional graph having a torque sensor value applied on a steering device on a horizontal axis and the number of rotations of an assist motor on a vertical axis, and a sensitivity identification map set with the sensitivity region is provided for every vehicle speed value and stored in a storage unit. The sensitivity index indicating the steering sense felt by the driver at each time point is outputted by referencing the sensitivity identification map based on the inputted vehicle speed value, the torque sensor value, and the number of rotations.

### SUMMARY

In the electrical power steering system, the electrical motor is rotated according to a control program set in advance, and an assisting force is supplied to the steering wheel by the rotational force of the electrical motor. In reality, however, a control program enabling an assisting force that matches the steering sense felt by the driver to be supplied is not sufficiently realized, and thus the driver tends to feel a sense of discomfort in the steering and the steering feeling may degrade.

The present invention has been devised to solve the problems described above, and an object thereof is to provide an electrical power steering control device capable of supplying an accurate assisting force corresponding to the steering sense felt by the driver and obtaining satisfactory steering feeling.

In accordance with one aspect of the present invention, an electrical power steering control device includes: a steering torque input unit for inputting a steering torque of a steering mechanism of a vehicle; an angular velocity input unit for inputting a rotation angular velocity of the steering mechanism; a vehicle speed input unit for inputting a vehicle speed of the vehicle; and a drive current command value output unit for outputting a drive current command value for driving a motor which applies an assisting force to the steering mechanism based on the inputs from the steering torque input unit, the angular velocity input unit, and the vehicle speed input unit; wherein the drive current command value output unit includes, a differential command value calculating unit for calculating a differential command value by differentiating the steering torque, a differential gain calculating unit for calculating a differential gain, which is a gain with respect to the differential command value, based on the steering torque and the vehicle speed, a first current command value calculating unit for calculating a first current command value based on the steering torque and the vehicle speed, a current gain calculating unit for determining a steering sense of the steering mechanism based on the steering torque and the rotation angular velocity, and calculating a first current gain, which is a gain witch respect to the first current command value, based on the determination result, a second current command value calculating unit for calculating a second current command value by multiplying the differential command value and the differential gain, a third current command value calculating unit for calculating a third current command value by multiplying the first current command value and the first current gain, and a drive current command value calculating unit for calculating the drive current command value by adding the second current command value and the third current command value.

As opposed to the related art of changing only the assist current value and the differential command value according to the steering torque and the vehicle speed, the drive current command value for driving the motor is finely controlled to enhance the adjustment accuracy thereof, and thus the driving force of the motor can also be fine tuned compared to the related art. An accurate assisting force (driving force of motor) corresponding to the steering sense felt by the steerer can be supplied, whereby satisfactory steering feeling can be obtained.

The electrical power steering control device according to the present invention may further include a fourth current command value calculating unit for calculating a fourth current command value based on the second current command value, wherein the current gain calculating unit may determine the steering sense of the steering mechanism based on the steering torque and the rotation angular velocity, and calculate a second current gain, which is a gain with respect to the second current command value, based on the determination result, the fourth current command calculating unit may calculate the fourth current command value by multiplying the second current command value and the second current gain; and the drive current command calculating unit may calculate the drive current command value by adding the fourth current command value and the third current command value instead of calculating the drive current command value by adding the second current command value and the third current command value.

Not only is the third current command value calculated based on the first current command value and the first current gain, but the fourth current command value is calculated based on the second current command value and the second current gain and the drive current command value is calculated based on the third current command value and the fourth current command value, and thus the driving force of the motor can be further fine tuned An accurate assisting force (driving force of motor) corresponding to the steering sense felt by the steerer can be supplied, whereby more satisfactory steering feeling can be obtained.

In the electrical power steering control device according to the present invention, the current gain calculating unit may include a first determination portion for determining a steering sense corresponding to each steering torque and rotation angular velocity from a plurality of steering senses classified based on the steering torque, and the rotation angular velocity, and a first current gain determination portion for determining a first current gain corresponding to the determination result based on the determination result by the first determination portion.

As opposed to the related art of determining the steering sense in correspondence to the number of rotations of the motor, the number of rotations of the motor is not used to determine the steering sense, and thus tuning does not need to be performed to determine the steering sense in accordance with the number of rotations that differs for every vehicle. Therefore, complicating tuning is not necessary, and the cost can be reduced. Moreover, the trouble of inputting the adjustment value can be omitted since the input of the adjustment value of the steering sense by the steered, which was performed in the related art, does not need to be carried out.

In the electrical power steering control device according to the present invention, the current gain calculating unit may include a first determination portion for determining a steering sense corresponding to each steering torque and rotation angular velocity from a plurality of steering senses classified based on the steering torque and the rotation angular velocity, a first current gain determination portion for determining a first current gain corresponding to the determination result based on the determination result by the first determination portion, and a second current gain determination portion for determining a second current gain corresponding to the determination result based on the determination result by the first determination portion.

As opposed to the related art of determining the steering sense in correspondence to the number of rotations of the motor, the number of rotations of the motor is not used to determine the steering sense, and thus tuning does riot need to be performed to determine the steering sense in accordance with the number of rotations that differs for every vehicle. Therefore, complicating tuning is not necessary, and the cost can be reduced. Moreover, the trouble of inputting the adjustment value can be omitted since the input of the adjustment value of the steering sense by the steerer, which was performed in the related art, does not need to be carried out. Furthermore, since the second current gain determination portion for determining the second current gain is arranged in addition to the first current gain determination portion for determining the first current gain, the drive current command value for driving the motor can be more finely controlled, and the driving force of the motor can be fine tuned.

In the electrical power steering control device according to the present invention, if the steering sense corresponding to the steering torque and the rotation angular velocity exists in plurals, the first determination portion may obtain one steering sense of the plurality of steering senses as a determination result according to a priority defined in advance.

Therefore, even if the steering sense corresponding to the steering torque and the rotation angular velocity exists in plurals, one of the steering senses can be assumed as the determination result of the first determination portion according to priority, and thus system error and the like in the determination can be suppressed.

In the electrical power steering control device according to the present invention, the current gain calculating unit may include a second determination portion for determining whether or not the steering sense of the steering mechanism corresponds to a specific steering sense based on the steering torque, the differential command value, and the vehicle speed. If determined as corresponding in the determination result by the second determination portion, whether or not the steering sense determined by the first determination portion is in plurals is verified, whether or not the specific steering sense by the second determination portion matches one of the plurality of steering senses by the first determination portion is verified if the steering sense is in plurals, and the matched steering sense may be determined as the steering sense of the steering mechanism if a matching steering sense exists.

As the steering sense is ultimately determined based on the determination result of the first determination portion and the determination result of the second determination portion, the steering sense felt by the steerer can be more accurately specified. The sense of discomfort in the steering feeling felt by the steerer thus can be further reduced, and thus more satisfactory steering feeling can be obtained.

In the electrical power steering control device according to the present invention, the current gain calculating unit may determine the steering sense of the steering mechanism based on a second determination result if a first determination result, which is a determination result of the first determination portion, and the second determination result, which is a determination result following the first determination result, are not different, may determine the steering sense of the steering mechanism based on the first determination result if the first determination result and the second determination result are different, and the determination result same as the second determination result is not obtained continuously for a predetermined number of times after the second determination result, and may determine the steering sense of the steering mechanism based on the second determination result if the first determination result and the second determination result are different, and the determination result same as the second determination result is obtained continuously for a predetermined number of times after the second determination result.

Therefore, even if the determination result by the first determination portion frequently changes, the steering sense can be suppressed from being frequently changed based on the determination result. Thus, the sense of discomfort in the steering feeling felt by the steerer can be further reduced, and more satisfactory steering feeling can be obtained.

In the electrical power steering control device according to the present invention, a first filter unit for smoothening the change of the first current gain outputted from the current gain calculating unit may be arranged between the current gain calculating unit and the third current command value calculating unit.

The rapid change of the first current gain based on the change of the steering sense can be suppressed. Thus, the rapid change of the drive current command value for driving the motor can be suppressed, whereby the steerer does not feel a sense of discomfort in the steering feeling in switching the steering sense.

In the electrical power steering control device according to the present invention, a second filter unit for smoothening the change of the second current gain outputted from the current gain calculating unit may be arranged between the current gain calculating unit and the fourth current command value calculating unit.

The rapid change of the second current gain based on the change of the steering sense can be suppressed. Thus, the rapid change of the drive current command value for driving the motor can be suppressed, whereby the steerer does not feel a sense of discomfort in the steering feeling in switching the steering sense.

According to the present invention, the drive current command value for driving the motor is calculated based on the steering torque, the rotation angular velocity of the steering mechanism, the vehicle speed, and the steering sense of the steering mechanism determined based on the steering torque and the rotation angular velocity, and thus the drive current command value can be finely controlled and the adjustment accuracy thereof can be enhanced. An accurate assisting force (driving force of motor) corresponding to the sleeting sense felt by the steerer thus can be supplied, and satisfactory steering feeling can be obtained.

### BRIEF DESCRIPTION OF THE DRAWINGS

Fig. 1 is a diagram showing an electrical power steering system;
Fig. 2 is a diagram showing function blocks of an ECU;
Fig. 3 is a diagram showing a differential gain curve;
Fig. 4 is a diagram showing a first current command value curve;
Figs. 5A to 5C are diagrams showing a classification map and correspondence tables;
Fig. 6 is a diagram showing a motor drive portion;
Fig. 7 is a diagram showing another example of the function blocks of the ECU;
Fig. 8. is a diagram showing still another example of the function blocks of the ECU;
Fig. 9 is a diagram showing yet another example of the function blocks of the ECU;
Fig. 10 is a diagram showing a discriminant graph;
Fig. 11 is a diagram showing a table for making a final determination;
Fig. 12 is a diagram showing yet another example of the function blocks of the ECU;
Fig. 13 is a diagram showing yet another example of the function blocks of the ECU;
Fig. 14 is a diagram showing yet another example of the function blocks of the ECU;
Fig. 15 is a diagram showing yet another example of the function blocks of the ECU;
Fig. 16 is a diagram showing yet another example of the function blocks of the ECU;
Fig. 17 is a diagram showing yet another example of the function blocks of the ECU;
Fig. 18 is a diagram showing yet another example of the function blocks of the ECU; and
Fig. 19 is a diagram showing yet another example of the function blocks of the ECU.

### RETAILED DESCRIPTION

Hereinafter, preferred embodiments of the present invention will be described with reference to the drawings.

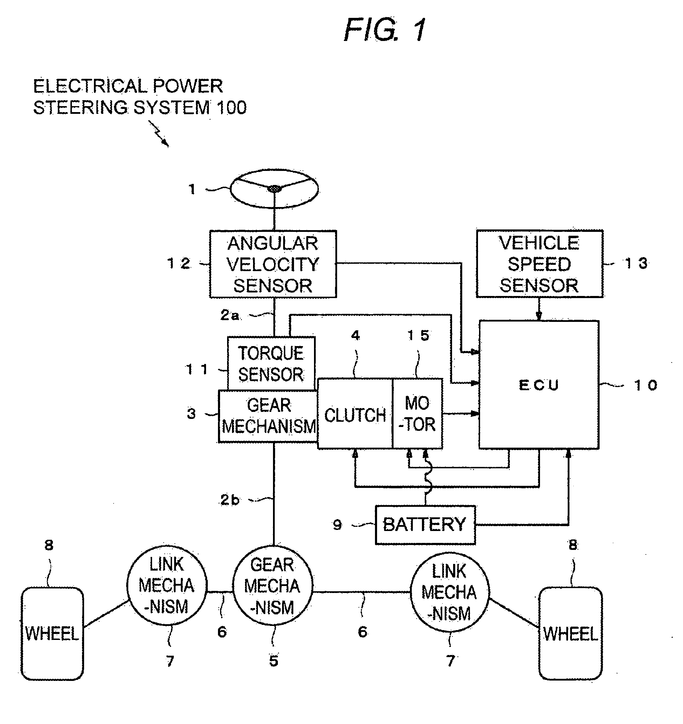

In Figs. 1 and 2, Figs. 6 to 9, and Figs. 12 to 19, like reference numerals are denoted for identical or corresponding portions.

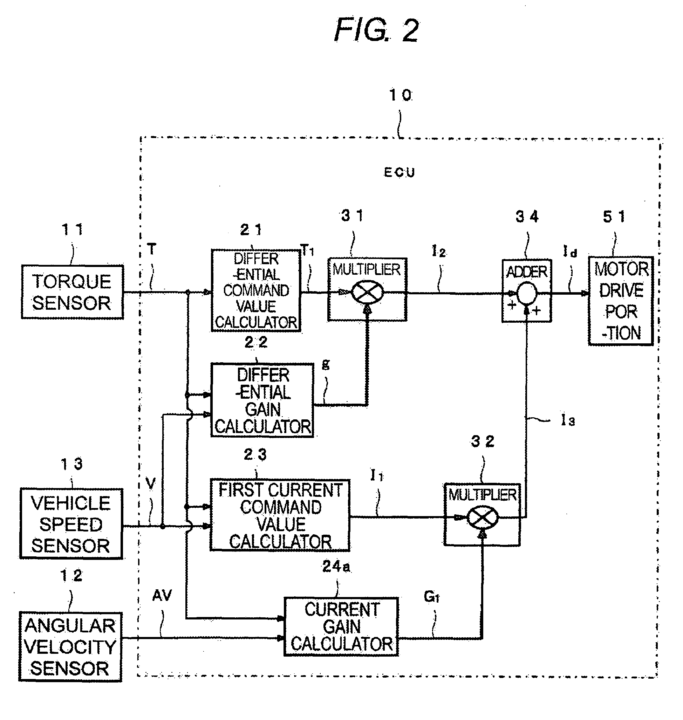

Fig. 1 is a diagram showing an electrical power steering system 100 including an electrical power steering control device (e.g., Fig. 2), to be hereinafter described, according to an embodiment of the present invention. The electrical power steering system 100 is mounted on a vehicle (e.g., automobile).

In the electrical power steering system 100 shown in the figure, when a steering wheel 1 is steered (rotation operated), the steering force is transmitted to a gear mechanism 3 through a shaft 2a, and then transmitted to a shaft 6 through a shaft 2b and a gear mechanism 5. The shaft 6 is driven by the steering force, where the direction of wheels 8 changes through a link mechanism 7 when the shaft 6 is driven.

When a motor 15 rotates, the driving force thereof is transmitted to the gear mechanism 3 through a clutch 4, and then is transmitted to the shaft 6 through the shaft 2b and the gear mechanism 5. Since the driving force of the motor 15 is transmitted to the shaft 6 in addition to the steering force transmitted by the steering of the steering wheel 1, the drive of the shaft 6 and the turn of the wheel 8 are assisted by such a driving force. In other words, the steering at the steering wheel 1 is assisted by the motor 15. The motor 15 in the present embodiment may be a brushless motor.

A torque sensor 11 detects a steering torque applied by the steering wheel 1. An angular velocity sensor 12 detects an angular velocity (rotating operation speed) of the steering Wheel 1. A vehicle speed sensor 13 detects a vehicle speed (traveling speed) of a vehicle. The torque sensor 11 serves as one embodiment of a steering torque input unit in the present invention, the angular velocity sensor 12 serves as one embodiment of an angular velocity input unit in the present invention, and the vehicle speed sensor 13 serves as one embodiment of a vehicle speed input unit in the present invention.

An ECU (Electronic Control Unit) 10 ON (couple)/OFF (separate) controls the clutch 4. The ECU 10 determines a current command value for driving the motor 15 based on the steering torque detected by the torque sensor 11, the angular velocity detected by the angular velocity sensor 12, and the vehicle speed detected by the vehicle speed sensor 13, and controls the drive of the motor 15 based on the current command value. The ECU 10 serves as one embodiment of a drive current command value output unit in the present invention.

A battery 9 supplies power to the ECU 10 and the motor 15. The ECU 10, the torque sensor 11 the angular velocity sensor 12, and the vehicle speed sensor 13 configure one embodiment of the electrical power steering control device according to the present invention.

Fig. 2, Figs. 7 to 9, and Figs. 12 to 14 are diagrams showing function blocks of the ECU 10, where the section (excluding motor drive portion 51) surrounded by a chain line in each figure is the function executed by a program in the ECU 10.

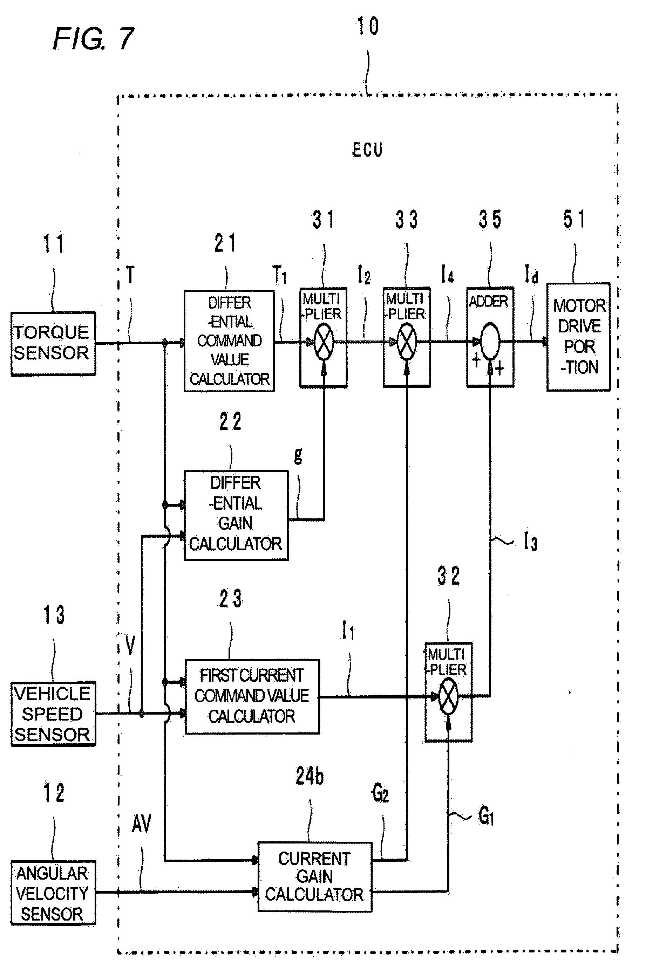

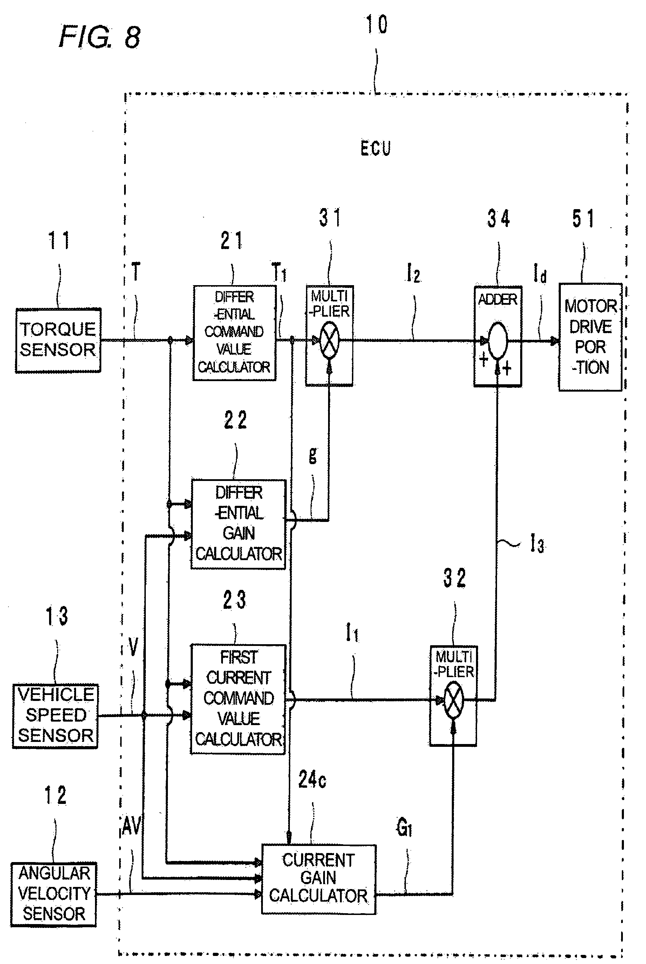

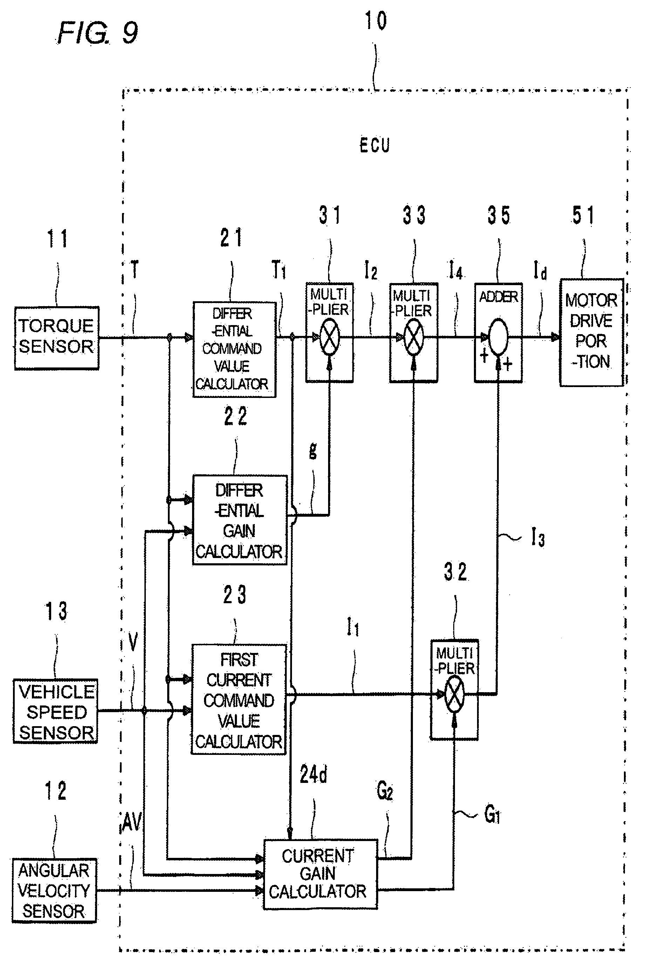

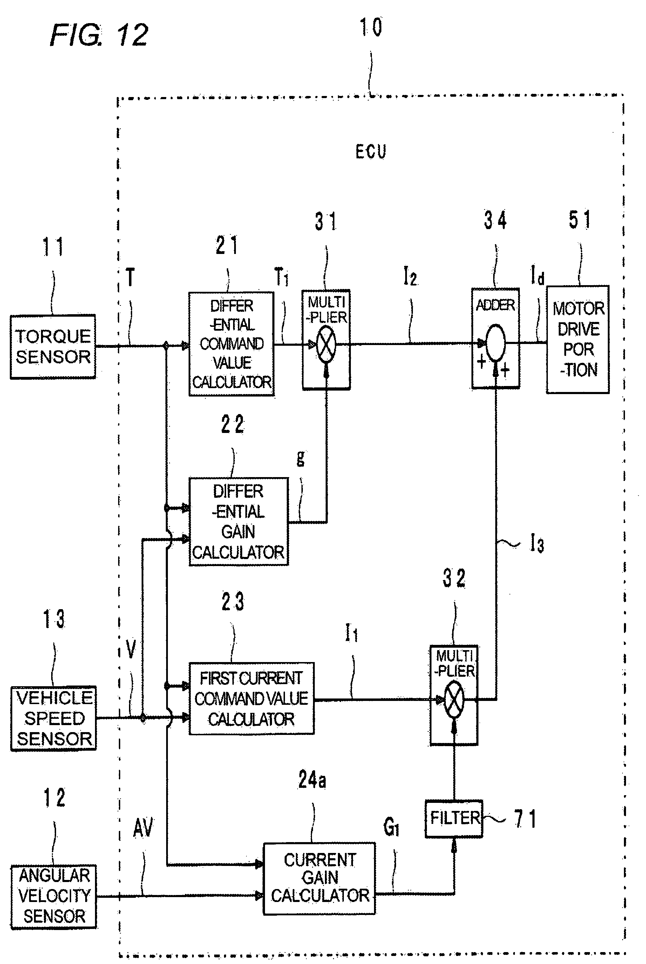

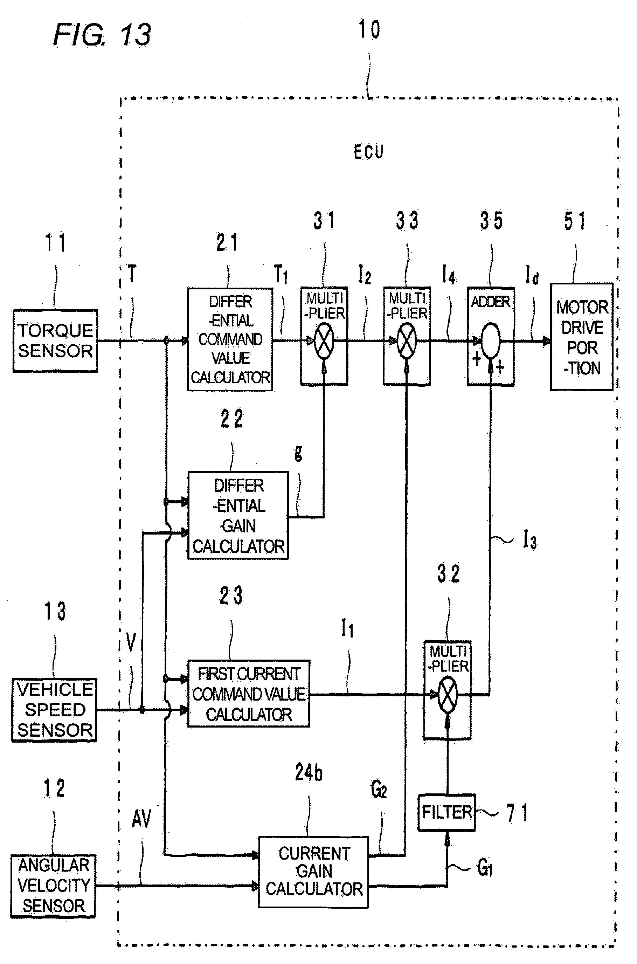

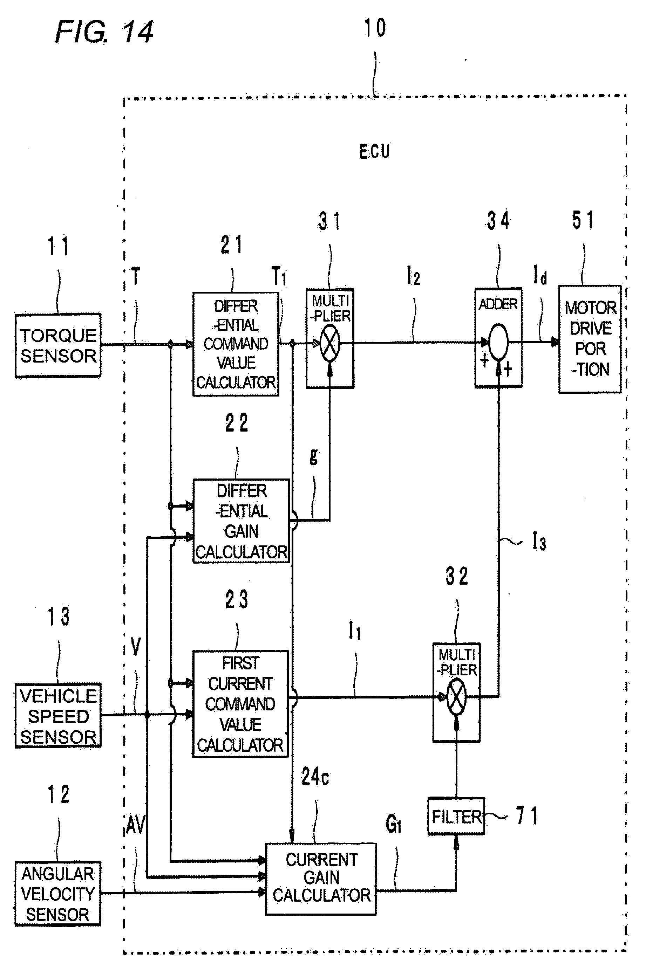

Fig. 2 is a diagram showing the function blocks of the ECU 10 in a first example of the present embodiment, and similarly, Fig. 7 is a diagram showing a second example, Fig. 8 is a diagram showing a third example, Fig. 9 is a diagram showing a fourth example, Fig. 12 is a diagram showing a ninth example, Fig. 13 is a diagram showing a tenth example, and Fig. 14 is a diagram showing an eleventh example. The illustrations of the fifth to eighth examples are omitted (details will be hereinafter described).

First, the ECU 10 (first example) shown in Fig. 2 will be described. The steering torque T of the steering wheel 1 (Fig-1) detected by the torque sensor 11 is inputted to a differential command value calculator 21, a differential gain calculator 22, a first current command value calculator 23, and a current gain calculator 24a.

The angular velocity AV of the steering wheel 1 detected by the angular velocity sensor 12 is inputted to the current gain calculator 24a. The vehicle speed V of the vehicle detected by the vehicle speed sensor 13 is inputted to the different gain calculator 22 and the first current command value calculator 23.

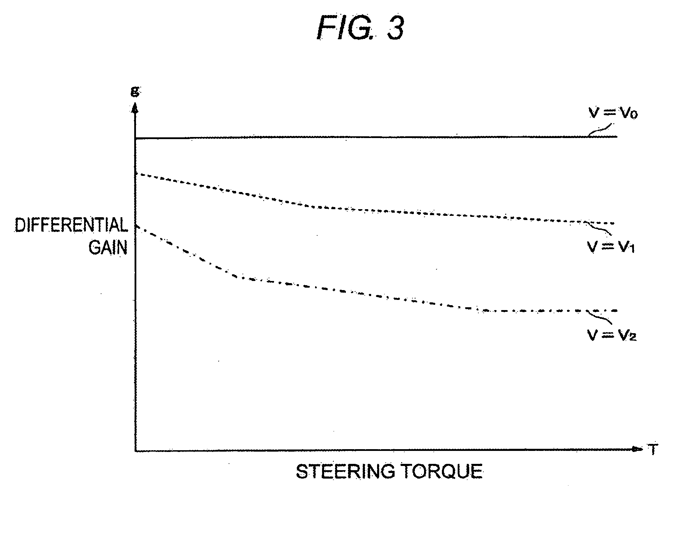

The differential command value calculator 21 calculates a differential command value T₁ by differentiating the steering torque T with respect to time, and outputs the same to a multiplier 31. The differential gain calculator 22 calculates a differential gain g, which is a gain with respect to the differential command value T₁, based on the steering torque T and the vehicle speed V, and outputs the same to the multiplier 31. Specifically, three types of differential gain curves (Fig. 3) that differ depending on the vehicle speed V are stored in advance in the differential gain calculator 22. The differential command value calculator 21 serves as one embodiment of a differential command value calculating unit in the present invention.

In the differential gain curve shown in Fig 3, the differential gain g (solid line) when the vehicle speed V is V₀ (e.g., V₀ = 0: when vehicle is stopped) is constant irrespective of the value of the steering torque T. The differential gain g (dotted line) when the vehicle speed V is V₁ (e.g., V₁ = 10: when vehicle is traveling) becomes smaller the larger the value of the steering torque T. Similarly, the differential gain g (chain line) when the vehicle speed V is V₂ (e.g., V₂ = 20: when vehicle is traveling) becomes smaller the larger the value of the steering torque T.

Furthermore, the differential gain g of the case where the vehicle speed V is V₀ is always larger than the differential gains g of the case where the vehicle speed V is V₁ and V₂, and the differential gain g of the case where the vehicle speed V is V₁ is always larger than the differential gain g of the case where the vehicle speed V is V₂.

The differential gain calculator 22 selects one of the differential gain curves according to the vehicle speed V₁ and calculates the differential gain g from the relevant differential gain curve and the steering torque T. The differential gain calculator 22 serves as one embodiment of a differential gain calculating unit in the present invention.

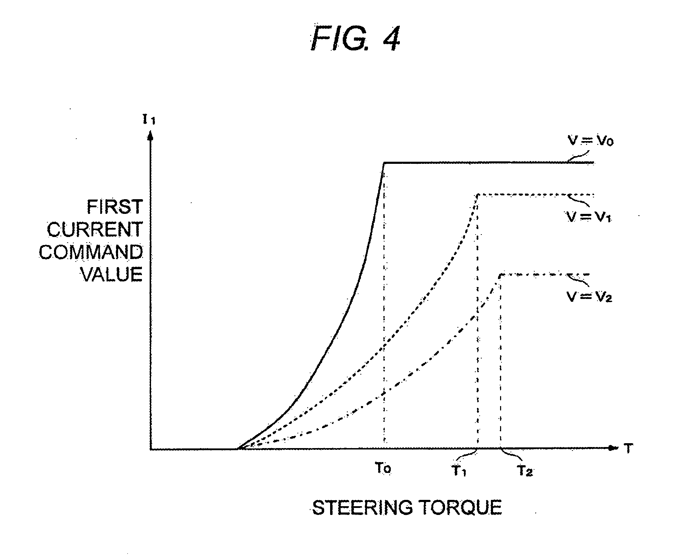

The first current command value calculator 23 (Fig. 2) calculates a first current command value I₁ based on the steering torque T and the vehicle speed V, and outputs the same to a multiplier 32. Specifically, three types of first current command value curves (Fig. 4) that differ depending on the vehicle speed V are stored in advance in the first current command value calculator 23. The first current command value calculator 23 serves as one embodiment of a first current command value calculating unit in the present invention,

In the first current command value curve shown in Fig. 4, the first current command value I₁ (solid line) when the vehicle speed V is V₀ (e.g., V₀ = 0: when vehicle is stopped) increases until the steering torque T becomes a predetermined value T₀, and becomes constant when exceeding the predetermined value T₀. Similarly, the first current command value I₁ (dotted line) when the vehicle speed V is V₁ (e.g., V₁ = 10: when vehicle is traveling) increases until the steering torque T becomes a predetermined value T₁, and becomes constant when exceeding the predetermined value T₁. The first current command value I₁ (chain line) when the vehicle speed V is V₂ (e.g., V₂ = 20: when vehicle is traveling) increases until the steering torque T becomes a predetermined value T₂, and becomes constant when exceeding the predetermined value T₂. In the present embodiment, the relationship of each predetermined value T₀, T₁, T₂ is T₀ ≤ T₁ ≤ T₂, and T₀ > 0.

Moreover, irrespective of the value of the steering torque T, the first current command value I₁ of the case where the vehicle speed V is V₀ is always larger than the first current command value I₁ of the case where the vehicle speed V is V₁ and V₂, and the first current command value I₁ of the case where the vehicle speed V is V₁ is always larger than the first current command value I₁ of the case where the vehicle speed V is V₂.

The first current command value calculator 23 selects one of the first current command value curves according to the vehicle speed V, and calculates the first current command value I₁ from the relevant first current command value curve and the steering torque T.

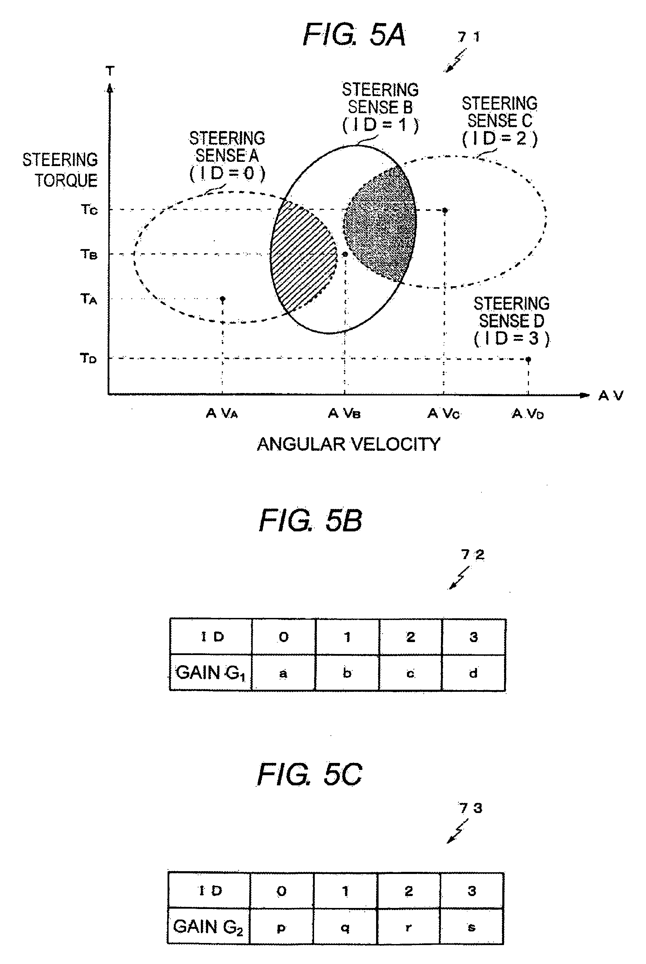

The current gain calculator 24a (Fig. 2) calculates (determines) the gain G₁, which is the gain with respect to the first current command value I₁, and outputs the same to the multiplier 32. Specifically, the current gain calculator 24a is stored in advance with a classification map 71 (Fig. 5A) in which the steering sense felt by the driver is classified based on the steering torque T and the angular velocity AV, and a correspondence table 72 (Fig. 5B) in which an identifier (described as the "ID" hereinafter) related to the determination result in the classification map 71 and the gain value (gain G₁) are corresponded. A correspondence table 73 (Fig. 5C) is not relevant to the present example, and thus will be specifically described in other examples to be hereinafter described. The current gain calculator 24a serves as one embodiment of a current gain calculating unit in the present invention; the classification map 71 serves as one embodiment of a first determination portion in the present invention, the correspondence table 72 serves as one embodiment of a first current gain determination portion in the present invention, and the correspondence table 73 serves as one embodiment of a second current gain determination portion in the present invention. The gain G₁ corresponds to a first current gain in the present invention.

The classification map 71 shown in Fig. 5A is distributed with four different types of steering senses of steering sense A (region within broken line), steering sense B (region within solid line), steering sense C (region within chain line), and steering sense D not belonging to any of the steering senses A to C.

In each steering sense (A to D), the above-described ID is set in advance, where the ID of a case where the determination result is the steering sense A is ID = 0. Similarly, the ID of a case where the determination result is the steering sense B is ID = 1, the ID of a case where the determination result is the steering sense C is ID = 2, and the ID of a case where the determination result is the steering sense D is ID = 3.

Thus, the steering sense felt by the driver is determined based on the steering torque T and the angular velocity AV, and the gain G₁ is calculated (determined) with reference to the correspondence table 72 shown in Fig. 5B based on the ID related to the relevant determination result. For instance, the determination result of a case where the steering torque T is T_{A} and the angular velocity AV is AV_{A} is the steering sense A, and the ID related to such a determination result is zero, and thus the gain G₁ (G₁ = a) corresponding to the ID (ID = 0) is calculated from the correspondence table 72.

Similarly, the determination result of a case where the steering torque T is T_{B} and the angular velocity AV is AV_{B} is the steering sense B, and the ID related to such a determination result is one, and thus the gain G₁ (G₁ = b) corresponding to the ID (ID = 1) is calculated from the correspondence table 72.

The determination result of a case where the steering torque T is T_{C} and the angular velocity AV is AV_{C} is the steering sense C, and the ID related to suck a determination result is two, and thus the gain G₁ (G₁ = c) corresponding to the ID (ID = 2) is calculated from the correspondence table 72.

The determination result of a case where the steering torque T is T_{D} and the angular velocity AV is AV_{D} is the steering sense D, and the ID related to such a determination result is three, and thus the gain G₁ (G₁ = d) corresponding to the ID (ID = 3) is calculated from the correspondence table 72.

If the steering sense is hard to determine through the above method, that is, when determining the steering sense of the portion (shaded area) where the steering sense A and the steering senses B overlap or the portion (gray area) where the steering sense B and the steering sense C overlap in the classification map 71, the steering sense that is on the front (not hidden) of the classification map 71 is prioritized in the present embodiment.

Specifically, when determining the steering sense of the portion (shaded area) where the steering sense A and the steering sense B overlap, the steering sense B positioned on the front than the steering sense A is preferentially applied as the determination result in the classification map 71, and the gain G₁ (G₁ = b) corresponding to the relevant ID (ID = 1) is calculated. Similarly, when determining the steering sense of the portion (gray area) where the steering sense B and the steering sense C overlap, the steering sense B positioned on the front than the steering sense C is preferentially applied as the determination result in the classification map 71, and the gain G₁ (G₁= b) corresponding to the relevant ID (ID =1) is calculated.

The multiplier 31 (Fig. 2) calculates the second current command value I₂ by multiplying the differential command value T₁ and the differential gain g, and outputs the same to an adder 34 (Fig. 2). The multiplier 32 (fig. 2) calculates the third current command value I₃ by multiplying the first current command value I₁ and the Gain G₁, and outputs the same to an adder 34. The adder 34 adds the third current command value I₃ to the second current command value t₂ so as to calculate the drive current command value I_{d}, and outputs the same to the motor drive portion 51. The multiplier 31 serves as one embodiment of a second current command value calculating unit in the present invention; the multiplier 32 serves as one embodiment of a third current command value calculating unit in the present invention, and the adder 34 serves as one embodiment of a drive current command value calculating unit in the present invention.

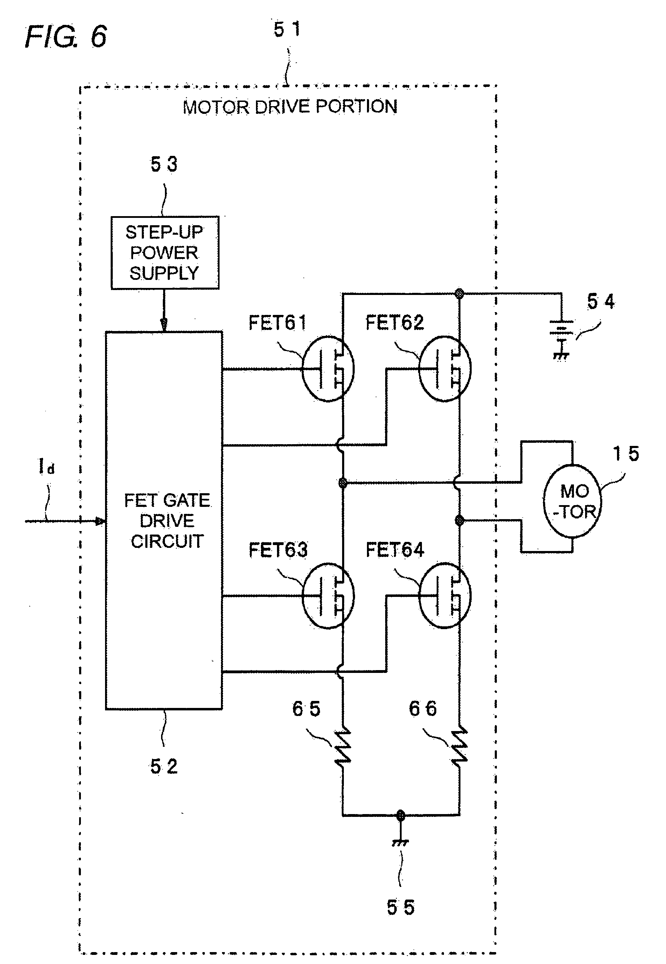

Fig. 6 is a diagram showing details of the motor drive portion 51 for driving the motor 15. The motor drive portion 51 drives the motor 15 in PWM (Pulse Width Modulation) control based on the drive current command value. I_{d} inputted to an FET (Field Effect Transistor) gate drive circuit 52, to be hereinafter described.

Specifically, the motor drive portion 51 is configured by the FET gate drive circuit 52, a step-up power supply 53, and an H bridge circuit including FETS 61 to 64 The FET gate drive circuit 52 drives the gate of each FET 61 to 64 based on the drive current command value I_{d}.

The FET 61 or the FET 62 is switched ON/OFF by the PWM signal having a predetermined duty ratio determined based on the drive current command Value I_{d} when driving the motor 15, The FET 63 or the FET 64 is turned ON when driving the motor 15. The FET 61 to 64 to drive is switched according to the rotation direction of the motor 15 determined from the sign of the PWM signal.

For instance, when the FET 61 is ON/OFF controlled while the FET 64 is in the ON state, the current of the level corresponding to the drive current command value I_{d} flows from the power supply 54 to the ground 55 through the FET 61, the motor 15, the FET 64, and a resistor 66, thereby rotatably driving the motor 15 in the forward direction.

When the FET 62 is ON/OFF controlled while the FET 63 is in the ON state, the current of the level corresponding to the drive current command value I_{d} flows from the power supply 54 to the ground 55 through the FET 62, the motor 15, the FET 63, and a resistor 65, thereby rotatably driving the motor 15 in the reverse direction.

Therefore, in the first example of the present embodiment, the ECU 10 (Fig. 2) calculates the differential command value T₁ based on the steering torque T of the steering wheel 1 (Fig. 1), calculates the differential gain g and the first current command value I₁ based on the steering torque T and the vehicle speed V, and calculates the gain G₁ based on the steering torque T and the angular velocity AV.

The second current command value I₂ is calculated based on the differential command value T₁ and the differential gain g, the third current command value I₃ is calculated based on the first current command value I₁ and the gain G₁, and the drive current command value I_{d} is calculated based on the second current command value I₂ and the third current command value I₃.

Thus, different from the related art of changing only the first current command value I₁ and the differential command value T₁ according to the steering torque T and the vehicle speed V, the drive current command value Id for driving the motor 15 (Fig. 1) is finely controlled to improve the adjustment accuracy thereof, and thus the driving force of the motor 15 can be fine tuned compared to the related art. Thus, an accurate assisting force (driving force of motor 15) corresponding to the steering sense felt by the driver can be supplied, and satisfactory steering feeling of the steering wheel 1 can be obtained.

Furthermore, as means for obtaining a satisfactory steering feeling of the steering wheel 1, the number of rotations of the motor 15 is not used in the present embodiment, as opposed to the related art in which the number of rotations of the motor 15 is used as one of the parameters, and thus the tuning of the electrical power steering system 100 does not need to be performed according to the number of rotations of the motor 15 that differs for every vehicle.

Moreover, as opposed to the related art in which an adjustment value input unit for carrying out the adjustment of the steering sense is arranged, the driver does not need to input the adjustment value for performing the adjustment of the steering sense, and thus the trouble of the driver can be alleviated.

The ECU 10 (second example) shown in Fig. 7 will now be described. The differential command value calculator 21, the differential gain calculator 22, the first current command value calculator 23, the multiplier 31, the multiplier 32, and the motor drive portion 51 in the figure are the same as those in the ECU 10 (Fig. 2, first example) described above, and have the same functions, and thus the description thereof will be omitted.

A current gain calculator 24b in Fig. 7 calculates (determines) the gain G₁, which is the gain with respect to the first current command value I₁, and outputs the same to the multiplier 32, similar to the current gain calculator 24a (Fig. 2) in the first example. Similar to the first example described above, the first current command value I₁, is a value calculated by the first current command value calculator 23 based on the steering torque T detected by the torque sensor 11 and the vesicle speed V detected by the vehicle speed sensor 13. The current gain calculator 24b serves as one embodiment of a current gain calculating unit in the present invention.

The current gain calculator 24b calculates (determines) the gain G₂, which is the gain with respect to the second current command value I₂, and outputs the same to a multiplier 33. Similar to the first example described above, the second current command value I₂ is a value calculated by the multiplier 31 based on the differential command value T₁ calculated by the differential command value calculator 21 by differentiating the steering torque T with respect to time, and the differentiation gain g calculated by the differentiation gain calculator 22. The multiplier 33 serves as one embodiment of a fourth current command value calculating unit in the present invention. The gain G₂ corresponds to the second current gain in the present invention.

Specifically, similar to the current gain calculator 24a (Fig. 2), the current gain calculator 24b stores the classification map 71 (Fig. 5A) and the correspondence table 72 (Fig. 5B). In addition, another correspondence table 73 (Fig. 5C) in which the ID related to the determination result in the classification map 71 and the gain value (gain G₂) are corresponded is also stored.

Here, the calculation method of the gain G₁ in the current gain calculator 24b is similar to the calculation method of the gain G₁ in the current gain calculator 24a (Fig. 2), and thus the description will be omitted and only the calculation method of the gain G₂ in the current gain calculator 24b will be described.

In the current gain calculator 24b, the steering sense is determined by the classification map 71 (Fig. 5A) based on the steering torque T and the angular velocity AV, and the gain G₂ is calculated by referencing the correspondence table 73 (Fig. 5C) based n the ID related to the determination result.

For instance, in the classification map 71 (Fig. 5A), the determination result of the case where the steering torque T is T_{A} and the angular velocity AV is AV_{A} is the steering sense A, and the ID related to such a determination result is zero, and thus the gain G₂ (G₂ = p) corresponding to the ID (ID = 0) is calculated from the correspondence table 73 (Fig, .5C).

Similarly, the determination result of the case where the steering torque T is T_{B} and the angular velocity AV is AV_{B} is the steering sense _{B}, and the ID related to such a determination result is one, and thus the gain G₂ (G₂ = q) corresponding to the ID (ID = 1) is calculated from the correspondence table 73.

The determination result of the case where the steering torque T is T_{c} and the angular velocity AV is AV_{c} is the steering sense C, and the ID related to such a determination result is two, and thus the gain G₂ (G₂ = r) corresponding to the ID (ID = 2) is calculated from the correspondence table 73.

The determination result of the case where the steering torque T is T_{D} and the angular velocity AV is AV_{D} is the steering sense D, and the ID related to such a determination result is three, and thus the gain G₂ (G₂ = s) corresponding to the ID (ID = 3) is calculated from the correspondence table 73.

If the steering sense is hard to determine through the above method, that is, when determining the steering sense of the portion (shaded area) where the steering senses A and the steering sense B overlap or the portion (gray area) where the steering sense B and the steering sense C overlap in the classification map 71, the steering sense that is on the front (not hidden) of the classification map 71 is prioritized.

Specifically, when determining the steering sense of the portion (shaded area) where the steering sense A and the steering sense B overlap, the steering sense B positioned on the front than the steering sense A is preferentially applied as the determination result in the classification map 71, and the gain G₂ (G₂ = q) corresponding to the relevant ID (ID = 1) is calculated. Similarly, when determining the steering sense of the portion (gray area) where the steering sense B and the steering sense C overlap, the steering sense B positioned on the front than the steering sense C is preferentially applied as the determination result in the classification map 71, and the gain G₂ (G₂ = q) corresponding to the relevant ID (ID = 1) is calculated.

The multiplier 33 (Fig. 7) calculates the fourth current command value I₄ by multiplying the second current command value I₂ and the gain G₂, and outputs the same to an adder 35. The adder 35 adds the fourth current command value 14 to the third current command value I₃ so as to calculate the drive current command value I_{d}, and outputs the same to the motor drive portion 51. Similar to the first example described above, the third current command value I₃ is a value calculated by the multiplier 32 based on the first current command value I₁ and the gain G₁ calculated by the current gain calculator 24b. The driving method of the motor drive portion 51 (Fig. 6) based on the drive current command value I_{d} is similar to the first example, and thus the description will be omitted. The adder 35 serves as one embodiment of a drive current command value calculating unit in the present invention.

Therefore, in the second example of the present invention, the ECU 10 (Fig. 7) calculates the differential command value T₁ based on the steering torque T of the steering wheel 1 (Fig. 1), calculates the differential gain g and the first current command values I₁ based on the steering torque T and the vehicle speed V, and calculates the gain G₁ and the gain G₂ based on the steering torque T and the angular velocity AV.

The second current command value I₂ is calculated based on the differential command Value T₁ and the differential gain g, the third current command value I₃ is calculated based on the first current command value I₁ and the gain G₁, the fourth current command value I₄ is calculated based on the second current command value I₂ and the gain G₂, and the drive current command value I_{d} is calculated based on the third current command value I₃ and the fourth current command value I₄.

Thus, different from the related art of changing only the first current command value I₁ and the differential command value T₁ according to the steering torque T and the vehicle speed V, the drive current command value Id for driving the motor 15 (Fig. 1) is finely controlled to improve the adjustment accuracy thereof, and thus the driving farce of the motor 15 can be fine tuned compared to the related art.

In the present example, not only is the third current command value I₃ calculated based on the first current command value I₁ and the gain G₁, but the fourth current command value I₄ is calculated based on the second current command value I₂ and the gain G₂ and the drive current command value I_{d} is calculated based on the third current command value I₃ and the fourth current command value I₄, and thus the driving force of the motor 15 can be more fine tuned than the first example

Thus, an accurate assisting force (driving force of motor 15) corresponding to the steering sense felt by the driver can be supplied, and satisfactory steering feeling of the steering wheel 1 can be obtained. Other effects are similar to the first embodiment, and thus the description will be omitted.

The ECU 10 (third example) shown in Fig. 8 will now be described. The differential command value calculator 21, the differential gain calculator 22, the first current command Value calculator 23, the multiplier 31, the multiplier 32, the multiplier 34, and the motor drive portion 51 in the figure are the same as those in the ECU 10 (Fig. 2, first example) described above, and have the same functions, and thus the description thereof will be omitted,

Similar to the current gain calculator 24a (Fig. 2) in the first example described above, a current gain calculator 24c in Fig. 8 is inputted with the steering torque T of the steering wheel 1 (Fig, 1) detected by the torque sensor 11 and the angular velocity (rotation operation speed) AV of the steering wheel 1 detected by the angular velocity sensor 12. The current gain calculator 24c serves as one embodiment of a current gain calculating unit in the present invention.

In addition, the vehicle speed V of the vehicle detected by the vehicle speed sensor 13 and the differential command value T₁ are inputted. The differential command value T₁ is a value calculated by the differential command value calculator 21 by differentiating the steering torque T with respect to time, similar to the first example.

The current gain calculator 24c calculates (determines) the gain G₁, which is the gain with respect to the first current command value I₁, and outputs the same to the multiplier 32, similar to the current gain calculator 24a (Fig. 2). Similar to the first example described above, the first current command value I₁ is a value calculated by the first current command value calculator 23 based on the steering torque T and the vehicle speed V.

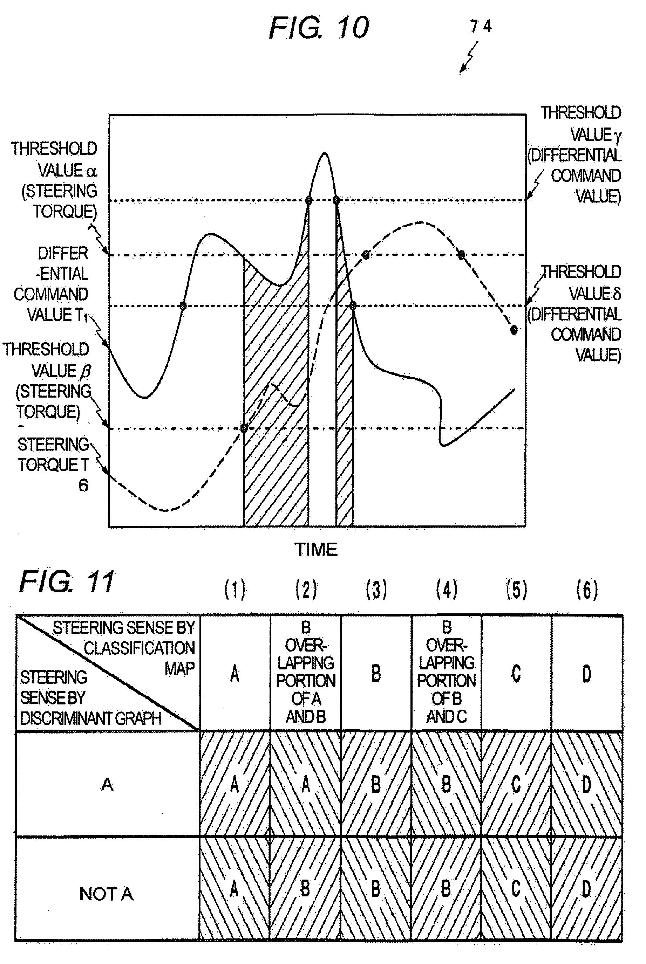

Specifically, similar to the current gain calculator 24a (Fig. 2), the current gain calculator 24c stores in advance the classification map 71 (Fig. 5A) and the correspondence table 72 (Fig. 5B), and also stores in advance a specific sense discriminant graph (hereinafter simply referred to as the "discriminant graph") 74 (Fig. 10) for discriminating (determining) whether or not corresponding to a certain specific steering sense based on the steering torque T, the differential command value T₁ and the vehicle speed V. The discriminant graph 74 serves as one embodiment of a second determination portion in the present invention.

Here, the calculation method of the gain G₁ in the current gain calculator 24c is different from the calculation method of the gain G₁ in the currant gain calculator 24a (Fig. 2), and thus will be described below.

In the current gain calculator 24c, the steering sense is determined by the classification map 71 (Fig 5A) based on the steering torque T and the angular velocity AV. The method of determining the steering sense by the classification map 71 (Fig. 5A) is similar to the determination method in the current gain calculator 24a (Fig. 2), and thus the description thereof will be omitted.

In the current gain calculator 24c, whether or not corresponding to a certain specific steering sense is discriminated by the discriminant graph 74 (Fig. 10) based on the steering torque T, the differential command value T₁, and the vehicle speed V.

Specifically, the discriminant graph 74 is a graph for discriminating whether the steering sense at each time point corresponds to a specific (important) steering sense set in advance, where a threshold value for discriminating whether or not corresponding to a specific steering sense is preliminarily set in the discriminant graph 74. The specific steering sense described above may be any of the steering senses A to D (Fig. 5A), but the specific steering sense is assumed as the steering sense A in the present embodiment, and the description will be made below based thereon.

The discriminant graph 74 is set with threshold values a, β (chain dashed line) of the steering torque T and threshold values γ, δ (dotted line) of the differential command value T₁. The threshold values α to δ are sequentially changed based on the vehicle speed V.

When the steering torque T shown with a broken line and the differential command value T₁ shown with a solid line are inputted to the discriminant graph 74, or in the present embodiment, when the steering torque T is a value between the threshold value α and the threshold value β, and the differential command value T₁ is a value between the threshold value γ and the threshold value δ, that is, when the steering torque T and the differential command value T₁ are both values within a shaded area in the figure, the steering sense at the relevant time point is discriminated as the steering sense A.

When the steering sense is obtained by the classification map 71 (Fig. 5A) and the discriminant graph 74 (Fig. 10), respectively, the final determination of the steering sense felt by the driver is made according to a table 75 shown in Fig. 11 and the like in the current gain calculator 24c (Fig. 8). The final determination result (steering sense) is the portion indicated with a shaded area in Fig. 11.

Specifically, if the determination result by the classification map 71 is the steering sense A and the discriminating result by the discriminant graph 74 is the steering sense A as in (1), the ultimately determined steering sense becomes the steering sense A. If the discriminating result by the discriminant graph 74 is not the steering sense A, the classification map 71 is prioritized and the ultimately determined steering sense becomes the steering sense A.

If the determination result by the classification map 71 is the steering sense B prioritized when the steering sense A and the steering sense B overlap (shaded area in Fig. 5A), and the discriminating result by the discriminant graph 74 is the steering sense A as in (2), the ultimately determined steering sense becomes the steering sense A. In this case, the discriminating result by the discriminant graph 74 is prioritized since the steering sense A is contained in the overlapping portion of the steering senses of the classification map 71 and the discriminating result by the discriminant graph 74 is also the steering sense A (matching of steering sense). If the discriminating result by the discriminant graph 74 is not the steering sense A, the ultimately determined steering sense becomes the steering sense B.

If the determination result by the classification map 71 is the steering sense B of a case where the steering sense A and the steering sense B do not overlap, and the discriminating result by the discriminant graph 74 is the steering sense A as in (3), the determination result by the classification map 71 is prioritized, and the ultimately determined steering sense becomes the steering sense B. In this case, the discriminating result (steering sense A) by the discriminant graph 74 is not prioritized since the steering sense A is not contained in the steering sense obtained from the classification map 71. If the discriminating result by the discriminant graph 74 is not the steering sense A, the ultimately determined steering feeling becomes the steering sense B.

If the determination result by the classification map 71 is the steering sense B prioritized when the steering sense B and the steering sense C overlap (gray area in Fig. 5A), and the discriminating result by the discriminant graph 74 is the steering sense A as in (4), the determination result by the classification map 71 is prioritized and the ultimately determined steering sense becomes the steering sense B. In this case, the discriminating result (steering senses A) by the discriminant graph 74 is not prioritized since the steering sense A is not contained in the overlapping portion of the steering senses of the classification map 71. If the discriminating result by the discriminant graph 74 is not the steering sense A, the ultimately determined steering sense becomes the steering sense B.

If the determination result by the classification map 71 is the steering sense C of the case where the steering sense B and the steering sense C do not overlap, and the discriminating result by the discriminant graph 74 is the steering sense A as in (5), the determination result by the classification map 71 is prioritized, and the ultimately determined steering sense becomes the steering sense C. In this case, the discriminating result by the discriminant graph 74 is not prioritized for reasons similar to (3). If the discriminating result by the discriminant graph 74 is not the steering sense A, the ultimately determined steering sense becomes the steering sense C.

If the determination result by the classification map 71 is the steering sense D, and the discriminating result by the discriminant graph 74 is the steering sense A as in (6), the determination result by the classification map 71 is prioritized, and the ultimately determined steering sense becomes the steering sense D. In this case, the discriminating result by the discriminant graph 74 is not prioritized for reasons similar to (3). If the discriminating result by the discriminant graph 74 is not the steering sense A, the ultimately determined steering sense becomes the steering sense D.

According to the determination method described above, the steering sense felt by the driver is ultimately determined, and the correspondence table 72 (Fig. 5B) is referenced based on the ID related to the final determination result to calculate the gain G₁.

The gain G₁ calculated by the current gain calculator 24c (Fig. 8) is multiplied with the first current command value I₁ in the multiplier 32, and the third current command value I₃ calculated by such multiplication is added to the second current command value I₂ in the adder 34. The second current command value I₂ is a value calculated in the multiplier 31 based on the differential command value T₁ and the differential gain g calculated by the differentiation gain calculator 22, similar to the first example.

The adder 34 adds the second current command value I₂ and the third current command value I₃ to calculate the drive current command value I_{d}, and outputs the same to the motor drive portion 51. The driving method of the motor drive: operation 51 based on the drive current command value I_{d} is similar to the first example, and thus the description thereof will be omitted

Therefore, in the third example of the present embodiment, the ECU 10 (Fig. 7) discriminates whether or not the steering sense at each time point corresponds to a specific (important) steering sense set in advance by the discriminant graph 74 (Fig. 10), and ultimately determines the steering sense based on the determination result by the classification map 71 (Fig. 5A) and the discriminating result by the discriminant graph 74, in addition to the determination method (first example) of the steering sense described above. Thus, when the steering sense corresponds to the overlapping portion in the classification map 71, the optimum steering sense can be selected. For instance, in the case of (2) of Fig. 11, the original steering sense is B according to the classification map 71, but is corrected from B to A if discriminated that the steering sense is A by the discriminant graph 74, and thus the steering sense matches the specific steering sense A and becomes more suitable. The steering sense felt by the driver thus can be more accurately specified using the classification map 71 and the discriminant graph 74.

Therefore, the sense of discomfort in the steering feeling felt by the driver can be further reduced, and the steering feeling of the steering wheel 1 (Fig. 1) becomes more satisfactory. Other effects are similar to the first example, and thus the description will be omitted.

The ECU 10 (fourth example) shown in Fig. 9 will how be described. The differential command value calculator 21, the differential gain calculator 22, the first current command value calculator 23, the multiplier 31, the multiplier 32, the multiplier 33, the adder 35 and the motor drive portion 51 in the figure are the same as those in the ECU 10 (Fig. 7, second example) described above, and have the same functions, and thus the description thereof will be omitted.

Similar to the current gain calculator 24b (Fig. 7) in the second example, a current gain calculator 24d in Fig. 9 is inputted with the steering torque T of the steering wheel 1 (Fig. 1) detected by the torque sensor 11 and the angular velocity (rotation operation speed) AV of the steering Wheel 1 detected by the angular velocity sensor 12. The current gain calculator 24d serves as one embodiment of a current gain calculating unit in the present invention.

In addition, the vehicle speed V of the vehicle detected by the vehicle speed sensor 13 and the differential command value T₁ are inputted. The differential command value T₁ is a value calculated by the differential command value calculator 21 by differentiating the steering torque T with respect to time, similar to the first example.

Similar to the current gain calculator 24a (Fig. 7), the current gain calculator 24d calculates (determines) the gain G₁, which is the gain with respect to the first current command value I₁ and outputs the same to the multiplier 32, and calculates (determines) the gain G₂, which is the gain with respect to the second current command value I₂ and outputs the same to the multiplier 33. Similar to the first example described above, the first current command value I₁, is a value calculated by the first current command value-calculator 23 based on the steering torque T and the vehicle speed V. Similar to the first example, the second current command value I₂ is a value calculated by the multiplier 31 based on the differential command value T₁ and the differential gain g calculated by the differential gain calculator 22.

Specifically, similar to the current gain calculator 24b (Fig. 7), the current gain calculator 24d stores in advance the classification map 71 (Fig. 5A), the correspondence table 72 (Fig. 5B), and the correspondence table 73 (Fig. 5C), and also stores in advance the discriminant graph 74 (Fig. 10) for discriminating whether or not corresponding to a certain specific steering sense based on the steering torque T, the differential command value T₁ and the vehicle speed V, similar to the current gain calculator 24c (Fig. 8, third example).

Here, the calculation method of the gains G₁, G₂ in the current gain calculator 24d is different from the calculation method of the gains G₁, G₂ in the current gain calculator 24b (Fig. 7), and thus will be described below.

In the current gain calculator 24d, the steering sense is determined by the classification map 71 (Fig. 5A) based on the steering torque T and the angular velocity AV. The determination method of the steering sense by the classification map 71 (Fig. 5A) is similar to the determination method in the current gain calculator 24b (Fig. 7), and thus the description will be omitted.

In the current gain calculator 24d, whether or not corresponding to a specific steering sense is discriminated by the discriminant graph 74 (Fig. 10) based on the steering torque T, the differential command value T₁, and the vehicle speed V. The determination method of the steering sense by the discriminant graph 74 is similar to the discriminating method in the current gain calculator 24c (Fig. 8), and thus the description will be omitted.

When the steering feeling is respectively obtained by the classification map 71 (Fig. 5A) and the discriminant graph 74 (Fig. 10) in the current gain calculator 24d of the above configuration, the final determination of the steering sense felt by the driver is performed according to the table 75 shown in Fig. 11. The final determination method of the steering sense is similar to the final determination method in the current gain calculator 24c (Fig. 8), and thus the description will be omitted.

The steering sense felt by the driver is ultimately determined through the above determination method, and the gain G₁ is calculated with reference to the correspondence table 72 (Fig. 5B) based on the ID related to the final determination result and the gain G₂ is calculated with reference to the correspondence table 73 (Fig. 5C) based on the ID related to the final determination result.

The gain G₁ calculated by the current gain calculator 24d (Fig. 9) is Multiplied with the first current command value I₁ in the multiplier 32, and the third current command value I₃ is calculated by such multiplication. The gain G₂ calculated by the current gain calculator 24d is multiplied with the second current command value I₂ in the multiplier 33, and the fourth current command value I₄ is calculated such multiplication.

The third current command value I₃ calculated in the multiplier 32 and the fourth current command value I₄ calculated in the multiplier 33 are respectively outputted to the adder 35, and the adder 35 adds the third current command value I₃ and the fourth current command value Iₐ to calculate the drive current command value I_{d} and outputs the drive current command value I_{d} to the motor drive portion 51. The driving method of the motor drive operation 51 based on the drive current command value I_{d} is simitar to the first example, and thus the description thereof will be omitted.

Therefore, in the fourth example of the present embodiment, the ECU 10 (Fig. 9) discriminates whether or not the steering sense at each time point corresponds to a specific (important) steering sense set in advance by the discriminant graph 74 (Fig. 10), and ultimately determines the steering sense based on the determination result by the classification map 71 (Fig. 5A) and the discriminating result by the discriminant graph 74 (Fig. 10), in addition to the determination method (second example) of the steering sense described above, and thus the steering sense felt by the driver can be more accurately specified, similar to the third example.

Therefore, the sense of discomfort in the steering feeling felt by the driver can be further reduced, and the steering feeling of the steering wheel 1 (Fig. 1) becomes more satisfactory.

In the present example, not only is the third current command value I₃ calculated based on the first current command value I₁ and the gain G₁, but the fourth current command value I₄ is calculated based on the second current command value I₂ and the gain G₂, and the drive current command value I_{d} is calculated based on the third current command value I₃ and the fourth current command value I₄, and thus the driving force of the motor 15 can be more fine tuned than the first example described above.

An accurate assisting force (driving force of motor 15) corresponding to the steering sense felt by the driver thus can be supplied, and satisfactory steering feeling of the steering Wheel 1 can be obtained. Other effects are similar to the first example, and thus the description will be omitted.

Fifth example to eighth example will be described below.
The fifth example to be hereinafter described is a variant of the ECRU 10 (first example) shown in Fig. 2, and similarly, the sixth example is a variant of the ECU 10 (second example) shown in Fig. 7, the seventh example is a variant of the ECU 10 (third example) shown in Fig. 8. and the eighth example is a variant of the ECU 10 (fourth example) shown in Fig. 9.

There are no changes in the function blocks of the ECU 10 in the first example and the fifth example, the second example and the sixth example, the third example and the seventh example, and the fourth example and the eighth example, and thus Figs. 2 and 7 to 9 are used for the function blocks of the ECU 10 according to the fifth to the eighth examples.

Similar to the first example, in the fifth example, the determination of the steering sense by the classification map 71 (Fig. 5A) is made in the current gain calculator 24a (Fig. 2).

However, in the present example, when change occurs in the determination result, that is, when the determination result of the previous time and the determination result of the current time are different, the determination result of the previous time is prioritized and the determination result of the current time is not applied. The determination result of the previous time serves as a first determination result in the present invention and the determination result of the current time serves as a second determination result in the present invention.

The determination result obtained for a predetermined number of times is applied and the steering sense is changed only if the determination result similar to the determination result of the current time is obtained continuously for a predetermined number of times subsequently, and the steering sense is not changed if the determination result is not obtained continuously for a predetermined number of times.

Specifically, if the determination result based on the classification map 71 (Fig. 5A) is the steering sense A the previous time and is the steering sense B the current time, the steering sense A, which is the determination result of the previous time, is prioritized and the steering sense B, which is the determination result of the current time, is not applied.

If the steering sense B is thereafter obtained continuously for a predetermined number of times (e.g., ten times), the determination result is changed from the steering sense A to the steering sense B, and if the steering sense B is not obtained continuously for a predetermined number of times (e.g., ten times), the determination result remains to be the steering sense A.

One example of the case where the determination result similar to the determination result of the current time is not thereafter obtained continuously for a predetermined number of times (e.g., ten times) includes a case where determination is made as the steering sense A and then determination is made as the steering sense B, and thereafter, determination is made as the steering sense B for less than a predetermined number of times (e.g., eight times), and then determination is made as the steering sense A or the steering sense C, or a case where determination is made as the steering sense A and then determination is made as the steering sense B and the steering sense C in order, and thereafter, determination is repeatedly made in the order of steering senses A, B, C.

The determination method described above is also performed in the current gain calculator 24b (Fig. 7) in the sixth example, and similarly, performed in the current gain calculator 24c (Fig. 8) in the seventh example and the current gain calculator 24d (Fig. 9) in the eighth example, and thus the description in each current gain calculator (24b to 24d) will be omitted.

Therefore, in the fifth to the eighth examples of the present embodiment, each ECU 10, in addition to the determination method (first to fourth examples) of the steering sense, sequentially verifies whether or not the same determination result (steering sense) is continuously obtained for a predetermined number of times, applies the determination result and changes the steering sense if the determination result is obtained continuously for a predetermined number of times as a result of the verification, and does not apply the determination result and does not change the steering sense if the determination result is not obtained continuously for a predetermined number of times. Thus, even in cases where the determination result changes frequently, the steering sense is suppressed from being frequently changed based on the determination result.

Therefore, the sense of discomfort in the steering feeding felt by the driver can be further reduced, and the steering feeling of the steering wheel 1 (Fig. 1) becomes more satisfactory. Other effects are similar to the first example to the fourth example, and thus the description will be omitted.

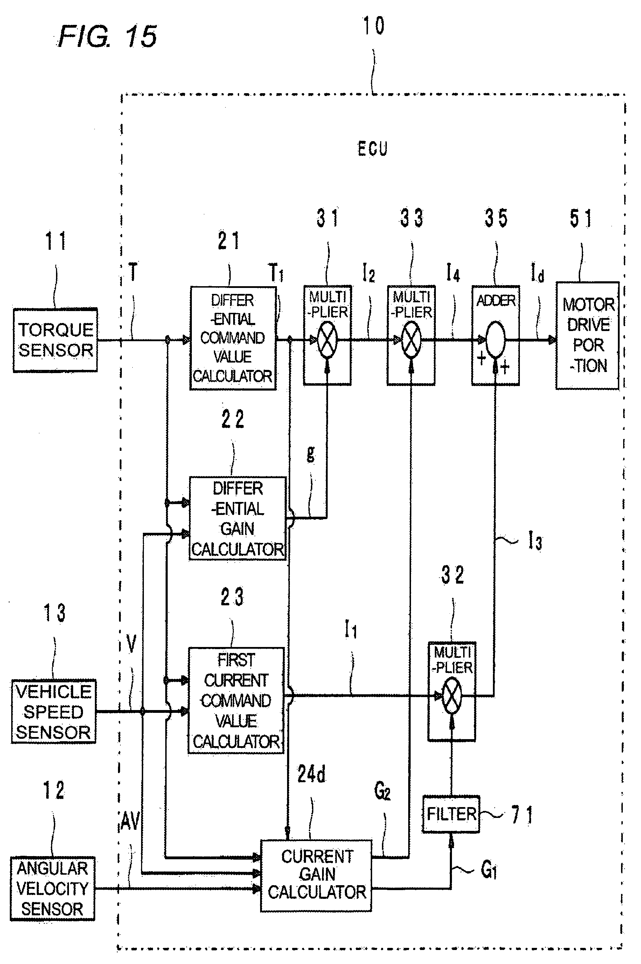

A ninth example shown in Fig. 12, a tenth example shown in Fig_{.} 13, an eleventh example shown in Fig. 14, and a twelfth example shown in Fig. 15 will be described below.

The ECU 10 (ninth example) shown in Fig. 12 is another variant of the ECU 10 (first example) shown in Fig. 2, and further includes a filter 71 between the current gain calculator 24a and the multiplier 32 .

Similarly, the ECU 10 (tenth example) shown in Fig. 13 is another variant of the ECU 10 (second example) shown in Fig. 7, and further includes the filter 71 between the current gain calculator 24b and the multiplier 32.

The ECU 10 (eleventh example) shown in Fig. 14 is another variant of the ECU 10 (third example) shown in Fig. 8, and further includes the filter 71. between the current gain calculator 24c and the multiplier 32.

The ECU 10 (twelfth example) shown in Fig. 15 is another variant of the ECU 10 (fourth example) shown in Fig. 9, and further includes the filter 71 between the current gain calculator 24d and the multiplier 32.

The filter 71 is configured by an LPF (Low Pass Filter), for example. In each example (ninth to twelfth examples), the gain G₁ outputted from the current gain calculator (24a to 24d) is inputted to the multiplier 32 through the filter 71. The filter 71 serves as one embodiment of a first filter unit in the present invention.

Therefore, in the ninth to the twelfth examples of the present embodiment, each ECU 10, in addition to the determination method (first to fourth examples) of the steering sense, inputs the gain G₁ outputted from each current gain calculator 24a to 24d in response to the change to the multiplier 32 through the filter 71 when the steering sense (e.g., steering sense A) is changed to another steering sense (e.g,, steering sense B). Thus, rapid change of the gain G₁ based on the change of the steering sense can be suppressed by the action of the filter 71 to smooth the change of the gain.

Since the rapid change of the drive current command value I_{d} outputted to the motor drive portion 51 (Fig. 6) can be suppressed, the steerer does not feel a sense of discomfort in the steering feeling when switching the steering sense. Other effects are similar to the first example to the fourth example, and thus the description will be omitted

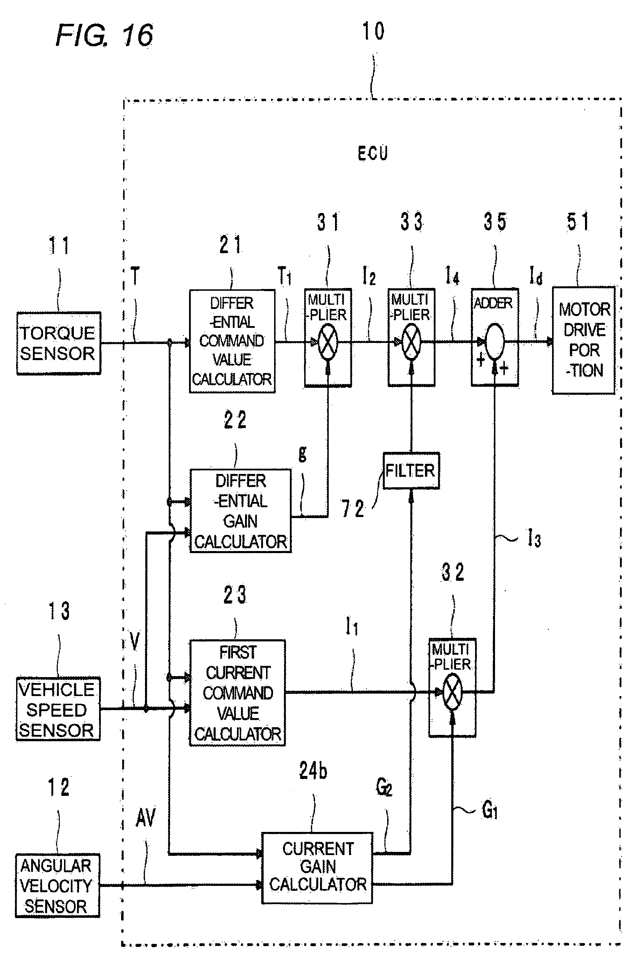

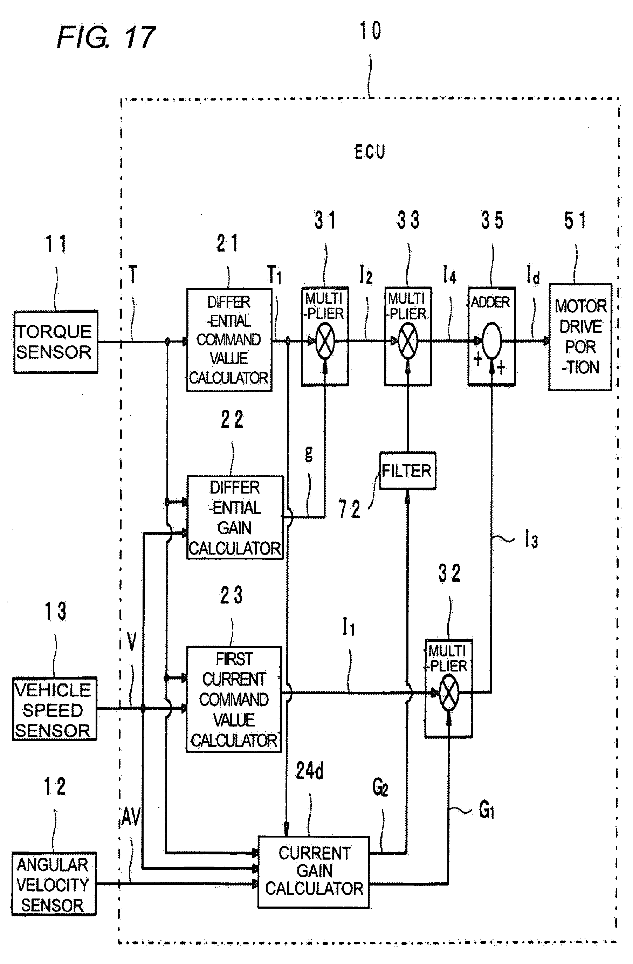

A thirteenth example shown in Fig. 16 and a fourteenth example shown in Fig. 17 will now be described.

The ECU 10 (thirteenth example) shown in Fig. 16 is another variant of the ECU 10 (second example) shown in Fig. 7, and further includes a filter 72 between the current gain calculator 24b and the multiplier 33.

The ECU 10 (fourteenth example) shown in Fig. 17 is another variant of the ECU 10 (fourth example) shown in Fig. 9, and includes the filter 72 between the current gain calculator 24d and the multiplier 33.

Similar to the filter 71, the filter 72 is configured by an LPF, for example. In each example (thirteenth and fourteenth examples), the gain G₂ outputted from the current gain calculator 24b, 24d is inputted to the multiplier 33 through the filter 72. The fitter 72 serves as one embodiment of a second filter unit in the present invention.

Therefore, in the thirteenth arid the fourteenth examples of the present embodiment, each ECU 10, in addition to the determination method (second and fourth examples) of the steering sense, inputs the gain G₂ outputted from each current gain calculator 24b, 24d in response to the change to the multiplier 33 through the filter 72 when the steering sense (e.g., steering sense A) is changed to another steering sense (e,g., steering sense B). Thus, rapid change of the gairs G₂ based on the change of the steering sense can be suppressed by the action of the filter 72 to smooth the change of the gain.

Since the rapid change of the drive current command value I_{d} outputted to the motor drive portion 51 (Fig. 6) can be suppressed, the steerer does not feel a sense of discomfort in the steering feeling When switching the steering sense. Other effects are similar to the second and fourth examples, and thus the description will be omitted.

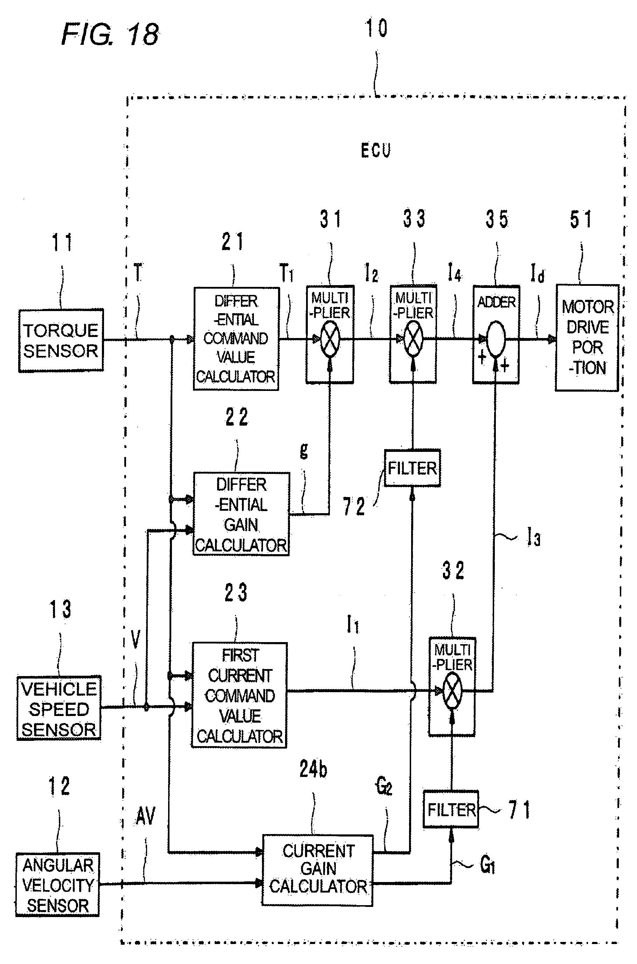

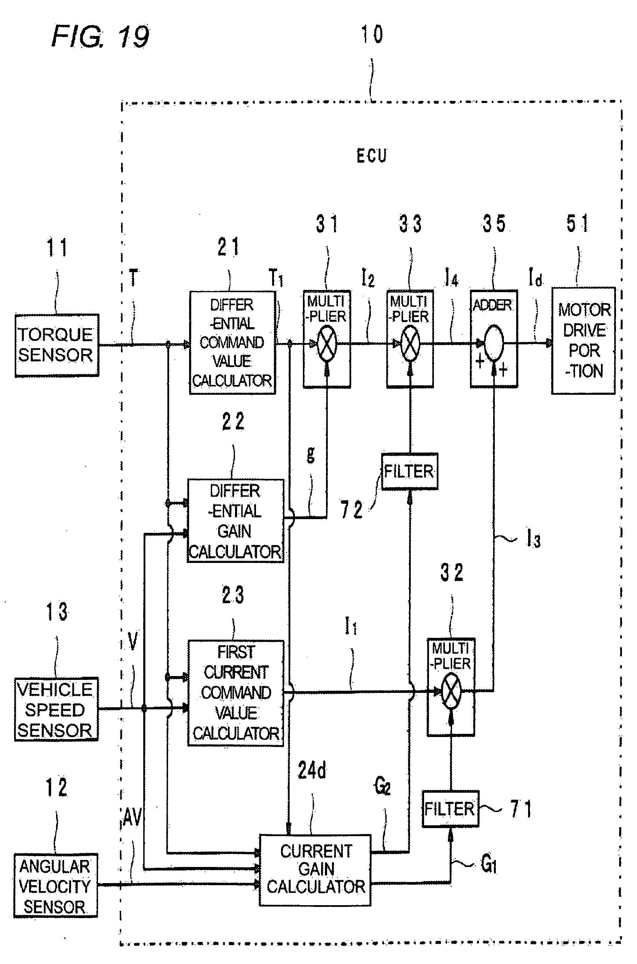

Lastly, a fifteenth example shown in Fig. 18 and a sixteenth example shown in Fig. 19 will be described.

The ECU 10 (fifteenth example) shown in Fig. 18 is another variant of the ECU 10 (second example) shown in Fig. 7, and is an example combining the ECU 10 (tenth example) shown in Fig. 13 and the ECU 10 (thirteenth example) shown in Fig. 16.

Thus, the filter 11 is arranged between the current gain calculator 24b and the multiplier 32, and the filter 72 is arranged between the current gain calculator 24b and the multiplier 33.

The ECU 10 (sixteenth example) shown in Fig. 19 is another variant of the ECU 10 (fourth example) shown in Fig. 9, and is an example combining the ECU 10 (twelfth example) shown in Fig. 15 and the ECU 10 (fourteenth example) shown in Fig. 17.

Thus, the filter 71 is arranged between the current gain calculator 24d and the multiplier 32, and the filter 72 is arranged between the current gain calculator 24d and the multiplier 33.

Therefore, in the eighteenth and the nineteenth examples of the present embodiment, each ECU 10, in addition to the determination method (second and fourth examples) of the steering sense, inputs the gains G₁, G₂ outputted from each current gain calculator 24b, 24d to the multipliers 32, 33 through the filters 71, 72 when the steering sense (e.g., steering sense A) is changed to another steering sense (e.g., steering sense B). Thus, rapid change of the gain G₁ based on the change of the steering sense can be suppressed by the filter 71, and rapid change of the gain G₂ based on the change of the steering sense can be suppressed by the filter 72.

Since the rapid change of the drive current command value I_{d} outputted to the motor drive portion 51 (Fig, 6) can be suppressed, The steerer does not feel a sense of discomfort in the steering feeling when switching the steering sense. Other effects are similar to the second and fourth examples, and thus the description will be omitted.

In the present invention, various embodiments other than those described above can be adopted. For instance, in all examples (first to sixteenth examples) of the above-described embodiment, three types of differential gain curves (Fig. 3) that differ depending on the vehicle speed V are stored in advance in the differential gain calculator 22 (e.g., Fig. 2), but this is not the sole case, and the vehicle speed V may be more finely set and greater number of types of the differential gain curve for every vehicle speed V may be stored.

In all examples of the above-described embodiment, the differential gain g when the vehicle speed V is V₀ is a constant value regardless of the value of the steering torque T and the differential gain g when the vehicle speed V is V₁ is a value that becomes smaller as the value of the steering torque T becomes larger, and similarly, the differential gain g when the vehicle speed V is V₂ is a value that becomes smaller as the value of the steering torque T becomes larger in the differential gain curves (Fig. 3), but this is not the sole case, and the differential gain g may be constant with different values regardless of the value of the steering torque T at all vehicle speeds (V₀, V₁, V₂). The differential gain g when the vehicle speed V is V₀ may be a value that becomes smaller as the value of the steering torque T becomes larger. Furthermore, the value (region) of the steering torque T may be provided such that the differential gain g when the vehicle speed V is V₁ or V₂ is larger than the differential gain g when the vehicle speed V is V₀.

In all examples of the above-described embodiment, three types of first current command value curve (Fig. 4) that differ depending on the vehicle speed V are stored in advance in the first current command value calculator 23 (e.g., Fig. 2), but this is not the sole case, and the vehicle speed V may be more finely set and greater number of types of the first current command value curve for every vehicle speed V may be stored.

In all examples of the above-described embodiment, the steering torque T is a positive value irrespective of the rotating direction of the steering wheel 1, and the first current command value I₁ is calculated from the value of the steering torque T and the first current command value curve for every vehicle speed V (Fig. 4), but this is not the sole case, and the steering torque T when the rotating direction of the steering wheel 1 is a right direction may be a positive value, the steering torque T when the rotating direction of the steering wheel 1 is a left direction may be a negative direction, and the first current command value I₁ may be calculated from the value of the steering torque T and the first current command value curve for every vehicle speed V.

In this case, the magnitude relationship of each predetermined value T₀, T₁, T₂ when the rotating direction of the steering wheel 1 is the left direction becomes T₀ ≥ T₁ ≥ T₂, and T₀ < 0. The first current command value curve becomes a curve (not shown) in which the curve shown in Fig. 4 and the curve (not shown) obtained by rotating the relevant curve by 180° with the origin (T = 0, I₁ = 0) as the center are continued, and thus the first current command value: I₁ takes a negative value when the steering torque T is a negative value.

In all examples of the above-described embodiment, the steering torque T at which the first current command value I₁ becomes a saturated state is a predetermined value T₀, T₁, T₂ and the magnitude relationship of the predetermined values T₀, T_{1,} T₂ is T₀ ≤ T₁ ≤ T₂ in the first current command value curve (Fig. 4) for every vehicle speed V, but this is not the sole case, and may be T₂ ≤ T₀ ≤ T₁. That is, restriction is not particularly applied on the magnitude relationship of the predetermined values T₀, T₁, T₂.

In all examples of the above-described embodiment, the saturation value of the first current command value I₁ differs for every vehicle speed V in the first current command value curve (Fig. 4) for every vehicle speed V, but this is not the sole case, and may not differ for every vehicle speed V. That is, the first current command value I₁ at the predetermined values T₀, T₁ may be the same, or the first current command value I₁ at the predetermined values T₀, T₂ may be the same. Similarly, the first current command value I₁ at the predetermined values T₁, T₂ may be the same, or the first current command value I₁ at the predetermined values T₀, T₁, T₂ may be the same.

In all examples of the above-described embodiment, the classification map 71 (Fig. 5A) is a classification map in which four types of steering senses of steering senses A to D are distributed, but is not limited thereto, and may be a classification map in which greater number of types of steering senses are distributed,

In this case, since the correspondence table 72 (Fig. 5B) in which the ID related to the determination result in the classification map 71 and the gain value (gain G₁) are corresponded is also stored in advance in each current gain calculator 24a to 24d, the ID related to the determination result (steering sense) in the classification map 71 needs to be increased with increase in the types of steering senses in the classification map 71, and the gain value (gain G₁) corresponding to the ID also needs to be set.

Furthermore, since the correspondence table 73 (Fig. 5C) in which the ID related to the determination result in the classification map 71 and the gain value (gain G₂) are corresponded is also stored in advance in the current gain calculators 24b and 24d of the current gain calculators 24a to 24d, the ID related to the determination result (steering sense) in the classification map 71 needs to be increased Witch increase in the types of steering senses in the classification map 71, and the gain value (gain G₂) corresponding to the ID also needs to be set.

In all examples of the above-described embodiment, in the classification map 71 (Fig. 5A), the steering sense B is preferentially applied as the determination result when determining the steering sense of the portion (shaded area) where the steering sense A and the steering sense B overlap, and the steering sense B is preferentially applied as the determination result when determining the steering sense of the portion (gray area) where the steering sense B and the steering sense C overlap, but this is not the sole case, and the steering sense A may be preferentially applied as the determination result when determining the steering sense of the portion (shaded area) where the steering sense A and the steering sense B overlap. That is, the priority of the steering sense can be arbitrarily selected at the overlapping portion of each steering sense.

In third to fourth, seventh to eight, eleventh to twelfth, fourteenth, and sixteenth examples of the above-described embodiment, the specific (important) steering sense in the discriminant graph 74 (fig. 10) stored in advance in each current gain calculator 24c, 24d is the steering sense A, but is not limited thereto, and the steering sense B or the steering sense C may be the specific steering sense.

Furthermore, in third to fourth, seventh to eight, eleventh to (twelfth, fourteenth, and sixteenth examples of the above-described embodiment, the threshold values α and β of the steering torque T and the thresholds values γ and δ of the differential command value T₁ are set in the discriminant graph 74 (Fig. 10), where determination is made as corresponding to the specific steering sense (e.g., steering sense A) set in advance if the steering torque T is a value between the threshold value α and the threshold value β and the differential command value T₁ is a value between the thresholds value γ and the threshold value δ, but this is not the sole case, and determination may be made as corresponding to the specific steering sense (e.g., steering sense A) if the steering torque, T is a value between the threshold value α and the threshold value β and the differential command value T₁ is not a value between the thresholds value γ and the threshold value δ.

The condition of corresponding to the specific steering sense includes, other than the above, a case where the steering torque T is not a value between the threshold value β and the threshold value β and the differential command value T₁ is a value between the thresholds value γ and the threshold value δ, or a case where the steering torque T is not a value between the threshold value α and the threshold value β and the differential command value T₁ is not a value between the thresholds value γ and the threshold value δ.

In all examples of the above-described embodiment, the angular velocity (rotation operation speed) is obtained using the angular velocity sensor 12, but this is not the sole case, and the angular velocity may be estimated from the output value of a sensor (not shown) for detecting the rotation amount of the steering wheel 1, the motor rotation sensor for detecting the rotation speed of the motor 15, and the like.

In all examples of the above-described embodiment, the motor 15 is a brush motor, but is not limited thereto, and may be a brushless motor.

Furthermore, the electrical power steering system 100 is mounted on a vehicle (e.g., automobile) in the above-described embodiment, but this is not the sole case, and may be mounted on ships, airplanes, and the like as long as the steering wheel 1 is provided.

## Claims

1. An electrical power steering control device comprising:
a steering torque input unit (11) for inputting a steering torque of a steering mechanism (1) of a vehicle;
an angular velocity input unit (12) for inputting a rotation angular velocity of the steering mechanism (1);
a vehicle speed input unit (13) for inputting a vehicle speed of the vehicle; and
a drive current command value output unit (10) for outputting a drive current command value for driving a motor which applies an assisting force to the steering mechanism (1) based on the inputs from the steering torque input unit (11), the angular velocity input unit (12), and the vehicle speed input unit (13); **characterized in that**
the drive current command value output unit (10) includes,
a differential command value calculating unit (21) for calculating a differential command value by differentiating the steering torque,
a differential gain calculating unit (22) for calculating a differential gain, which is again with respect to the differential command value, based on the steering torque and the vehicle speed,
a first current command value calculating unit (23) for calculating a first current command value based on the steering torque and the vehicle speed,
a current gain calculating unit: (24a to 24d) for determining a steering sense of the steering mechanism (1) based on the steering torque and the rotation angular velocity, and calculating a first current gain, which is a gain with respect to the first current command value, based on the determination result,
a second current command value calculating unit (31) for calculating a second current command value by multiplying the differential command value and the differential gain,
a third current command value calculating unit (32) for calculating a third current command value by multiplying the first current command value and the first current gain, and
a drive current command value calculating unit (34) for calculating the drive current command value by adding the second current command value and the third current command value.

2. The electrical power steering control device according to claim 9, further comprising:
a fourth current command value calculating unit (33) for calculating a fourth current command value based on the second current command value, **characterized in that**
the current gain calculating unit (24b) determines the steering sense of the steering mechanism (1) based on the steering torque and the rotation angular velocity, and calculates a second current gain, which is a gain witch respect to the second current command value, based on the determination result;
the fourth current command calculating unit (33) calculates the fourth current command value by multiplying the second current command vale and the second current gain; and
the drive current command calculating unit (34) calculates the drive current command value by adding the fourth current command value and the third current command value instead of calculating the drive current command value by adding the second current command value and the third current command value.

3. The electrical power steering control device according to claim 1, **characterized in that**
the current gain calculating unit (24a) includes: a first determination portion (71) for determining a steering sense corresponding to each steering torque and rotation angular velocity from a plurality of steering senses classified based on the steering torque and the rotation angular velocity, and a first current gain determination portion (72) for determining a first current gain corresponding to the determination result based an the determination result by the first determination portion (71).

4. The electrical power steering control device according to claim 2, **characterized in that**
the current gain calculating unit (24b to 24d) includes a first determination portion (71) for determining a steering sense corresponding to each steering torque and rotation angular velocity from a plurality of (steering senses classified based on the steering torque and the rotation angular velocity, a first current gain determination portion (72) for determining a first current gain corresponding to the determination result based on the determination result by the first determination portion (71), and a second current gain determination portion (73) for determining a second current gain corresponding to the determination result based on the determination result by the first determination portion (71).

5. The electrical power steering control device according to claim 3 or 4, **characterized in that**
if the steering sense corresponding to the steering torque and the rotation angular velocity exists in plurals, the first determination portion (71) obtains one steering sense of the plurality of steering senses as a determination result according to a priority defined in advance.

6. The electrical power steering control device according to claim 5, **characterized in that**
the current gain calculating unit (24c) includes a second determination portion (74) for determining whether or not the steering sense of the steering mechanism (1) corresponds to a specific steering sense based on the steering torque, the differential command values, and the vehicle speed; and
if determined as corresponding in the determination result by the second determination portion (74), whether or not the steering sense determined by the first determination portion (71) is in plurals is verified, whether or not the specific steering sense by the second determination portion (74) matches one of the plurality of steering senses by the first determination portion (71) is verified if the steering sense is in plurals, and the matched steering sense is determined as the steering sense of the steering mechanism (1) if a matching steering sense exists.

7. The electrical power steering control device according to any one of claims 3 to 6, **characterized in that**
the current gain calculating unit (24a, 24b, 24c),
determines the steering sense of the steering mechanism (1) based on a second determination result if a first determination result, which is a determination result of the first determination portion (71), and the second determination result, which is a determination result following the first determination result, are not different,
determines the steering sense of the steering mechanism (1) based on the first determination result if the first determination result and the second determination result are different, and the determination result same as the second determination result is not obtained continuously for a predetermined number of times after the second determination result, and
determines the steering sense of the steering mechanism (1) based on the second determination result if the first determination result and the second determination result are different, and the determination result same as the second determination result is obtained continuously for a predetermined number of times after the second determination result.

8. The electrical power steering control device according to any one of claims 1 to 7, **characterized in that** a first filter unit (71) for smoothening the change of the first current gain outputted from the current gain calculating unit (24a to 24d) is arranged between the current gain calculating unit (24a to 24d) and the third current command value calculating unit (32).

9. The electrical power steering control device according to any one of claims 2 or 4 to 8, **characterized in that** a second filter unit (72) for smoothening the change of the second current gain outputted from the current gain calculating unit (24a to 24d) is arranged between the current gain calculating unit (24a, 24d) and the fourth current command value calculating unit (33).

## Patentansprüche

1. Elektrische Servolenkungssteuervorrichtung, welche aufweist:
eine Lenkdrehmomenteingabeeinheit (11) zur Eingabe eines Lenkdrehmoments eines Lenkmechanismus (1) eines Fahrzeugs;
eine Winkelgeschwindigkeitseingabeeinheit (12) zur Eingabe einer Drehwinkelgeschwindigkeit des Lenkmechanismus (1);
eine Fahrzeuggeschwindigkeitseingabeeinheit (13) zur Eingabe einer Fahrzeuggeschwindigkeit des Fahrzeugs; und
eine Ansteuerstrombefehlswertausgabeeinheit (10) zur Ausgabe eines Ansteuerstrombefehlswerts zur Ansteuerung eines Motors, welcher eine Unterstützungskraft auf den Lenkmechanismus (1) beruhend auf den Eingaben aus der Lenkdrehmomenteingabeeinheit (11), der Winkelgeschwindigkeitseingabeeinheit (12) und der Fahrzeuggeschwindigkeitseingabeeinheit (13) aufbringt; **dadurch gekennzeichnet, dass**
die Ansteuerstrombefehlswertausgabeeinheit
eine Differentialbefehlswertberechnungseinheit (21) zur Berechnung eines Differentialbefehlswerts durch Differenzieren des Lenkdrehmoments,
eine Differentialverstärkungsberechnungseinheit (22) zur Berechnung einer Differentialverstärkung, welche eine Verstärkung in Bezug auf den Differentialbefehlswert ist, beruhend auf dem Lenkdrehmoment und der Fahrzeuggeschwindigkeit, und
eine erste Strombefehlswertberechnungseinheit (23) zur Berechnung eines ersten Strombefehlswerts beruhend auf dem Lenkdrehmoment und der Fahrzeuggeschwindigkeit,
eine Stromverstärkungsberechnungseinheit (24a - 24d) zur Bestimmung einer Lenkrichtung des Lenkmechanismus (1) beruhend auf dem Lenkdrehmoment und der Drehwinkelgeschwindigkeit, und zur Berechnung einer ersten Stromverstärkung, welche eine Verstärkung in Bezug auf den ersten Strombefehlswert ist, beruhend auf dem Bestimmungsergebnis,
eine zweite Strombefehlswertberechnungseinheit (31) zur Berechnung eines zweiten Strombefehlswerts durch Multiplizieren des Differentialbefehlswerts und der Differentialverstärkung,
eine dritte Strombefehlswertberechnungseinheit (32) zur Berechnung eines dritten Strombefehlswerts durch Multiplizieren des ersten Strombefehlswerts und der ersten Stromverstärkung, und
eine Ansteuerstrombefehlswertberechnungseinheit (34) zur Berechnung des Ansteuerstrombefehlswerts durch Addieren des zweiten Strombefehlswerts und des dritten Strombefehlswerts enthält.

2. Elektrische Servolenkungssteuervorrichtung nach Anspruch 1, welche ferner aufweist:
eine vierte Strombefehlswertberechnungseinheit (33) zur Berechnung eines vierten Strombefehlswerts beruhend auf dem zweiten Strombefehlswert, **dadurch gekennzeichnet, dass**
die Stromverstärkungsberechnungseinheit (24b) die Lenkrichtung des Lenkmechanismus (1) beruhend auf dem Lenkdrehmoment und der Drehwinkelgeschwindigkeit bestimmt und eine zweite Stromverstärkung, welche eine Verstärkung in Bezug auf den zweiten Strombefehlswert ist, beruhend auf dem Bestimmungsergebnis berechnet;
die vierte Strombefehlswertberechnungseinheit (33) den vierten Strombefehlswert durch Multiplizieren des zweiten Strombefehlswerts und der zweiten Stromverstärkung berechnet; und
die Ansteuerstrombefehlswertberechnungseinheit (34) den Ansteuerstrombefehlswert durch Addieren des vierten Strombefehlswerts und des dritten Strombefehlswerts berechnet, anstelle den Ansteuerstrombefehlswert durch Addieren des zweiten Strombefehlswerts und des dritten Strombefehlswerts zu berechnen.

3. Elektrische Servolenkungssteuervorrichtung nach Anspruch 1, **dadurch gekennzeichnet, dass**
die Stromverstärkungsberechnungseinheit (24a) einen ersten Bestimmungsabschnitt (71) zur Bestimmung einer Lenkrichtung entsprechend einem jeden Lenkdrehmoment und jeder Drehwinkelgeschwindigkeit aus einer Anzahl von Lenkrichtungen, die beruhend auf dem Lenkdrehmoment und der Drehwinkelgeschwindigkeit klassifiziert sind, und einen ersten Stromverstärkungsbestimmungsabschnitt (72) zur Bestimmung einer ersten Stromverstärkung entsprechend dem Bestimmungsergebnis beruhend auf dem Bestimmungsergebnis durch den ersten Bestimmungsabschnitt (71) enthält.

4. Elektrische Servolenkungssteuervorrichtung nach Anspruch 2, **dadurch gekennzeichnet, dass**
die Stromverstärkungsberechnungseinheit (24b - 24d) einen ersten Bestimmungsabschnitt (71) zur Bestimmung einer Lenkrichtung entsprechend einem jeden Lenkdrehmoment und einer jeden Drehwinkelgeschwindigkeit aus einer Anzahl von Lenkrichtungen, die beruhend auf dem Lenkdrehmoment und der Drehwinkelgeschwindigkeit klassifiziert sind, einen ersten Stromverstärkungsbestimmungsabschnitt (72) zur Bestimmung einer ersten Stromverstärkung entsprechend dem Bestimmungsergebnis beruhend auf dem Bestimmungsergebnis durch den ersten Bestimmungsabschnitt (71), und einen zweiten Stromverstärkungsbestimmungsabschnitt (73) zur Bestimmung einer zweiten Stromverstärkung entsprechend dem Bestimmungsergebnis beruhend auf dem Bestimmungsergebnis durch den ersten Bestimmungsabschnitt (71) enthält.

5. Elektrische Servolenkungssteuervorrichtung nach Anspruch 3 oder 4, **dadurch gekennzeichnet, dass**,
wenn die dem Lenkdrehmoment und der Drehwinkelgeschwindigkeit entsprechende Lenkrichtung mehrfach existiert, der erste Bestimmungsabschnitt (71) eine Lenkrichtung aus der Anzahl von Lenkrichtungen als ein Bestimmungsergebnis gemäß einer vorab definierten Priorität gewinnt.

6. Elektrische Servolenkungssteuervorrichtung nach Anspruch 5, **dadurch gekennzeichnet, dass**
die Stromverstärkungsberechnungseinheit (24c) einen zweiten Bestimmungsabschnitt (74) zur Bestimmung, ob die Lenkrichtung des Lenkmechanismus (1) einer bestimmten Lenkrichtung entspricht oder nicht, beruhend auf dem Lenkdrehmoment, dem Differentialbefehlswert und der Fahrzeuggeschwindigkeit enthält, und,
wenn durch den zweiten Bestimmungsabschnitt (74) als dem Bestimmungsergebnis entsprechend bestimmt, verifiziert wird, ob die mit dem ersten Bestimmungsabschnitt (71) bestimmte Lenkrichtung mehrfach vorliegt oder nicht, wenn die Lenkrichtung mehrfach vorliegt, verifiziert wird, ob die spezifische Lenkrichtung gemäß dem zweiten Bestimmungsabschnitt (74) mit einer der Anzahl von Lenkrichtungen gemäß dem ersten Bestimmungsabschnitt (71) übereinstimmt, und die übereinstimmende Lenkrichtung als die Lenkrichtung des Lenkmechanismus (1) bestimmt wird, wenn eine übereinstimmende Lenkrichtung existiert.

7. Elektrische Servolenkungssteuervorrichtung nach einem der Ansprüche 3 bis 6, **dadurch gekennzeichnet, dass**
die Stromverstärkungsberechnungseinheit (24a, 24b, 24c)
die Lenkrichtung des Lenkmechanismus (1) beruhend auf einem zweiten Bestimmungsergebnis bestimmt, wenn ein erstes Bestimmungsergebnis, welches ein Bestimmungsergebnis des ersten Bestimmungsabschnitts (71) ist, und das zweite Bestimmungsergebnis, welches ein Bestimmungsergebnis folgend auf das erste Bestimmungsergebnis ist, nicht unterschiedlich sind,
die Lenkrichtung des Lenkmechanismus (1) beruhend auf dem ersten Bestimmungsergebnis bestimmt, wenn das erste Bestimmungsergebnis und das zweite Bestimmungsergebnis unterschiedlich sind, und wenn ein gleiches Bestimmungsergebnis wie das zweite Bestimmungsergebnis nicht kontinuierlich eine bestimmte Anzahl von Malen nach dem zweiten Bestimmungsergebnis gewonnen wird, und
die Lenkrichtung des Lenkmechanismus (1) beruhend auf dem zweiten Bestimmungsergebnis bestimmt, wenn das erste Bestimmungsergebnis und das zweite Bestimmungsergebnis unterschiedlich sind, und ein gleiches Bestimmungsergebnis wie das zweite Bestimmungsergebnis kontinuierlich für eine bestimmte Anzahl von Malen nach dem zweiten Bestimmungsergebnis gewonnen wird.

8. Elektrische Servolenkungssteuervorrichtung nach einem der Ansprüche 1 bis 7, **dadurch gekennzeichnet, dass** eine erste Filtereinheit (71) zur Glättung der Änderung der von der Stromverstärkungsberechnungseinheit (24a - 24d) ausgegebenen ersten Stromverstärkung zwischen der Stromverstärkungsberechnungseinheit (24a - 24d) und der dritten Strombefehlswertberechnungseinheit (32) angeordnet ist.

9. Elektrische Servolenkungssteuervorrichtung nach einem der Ansprüche 2 oder 4 bis 8, **dadurch gekennzeichnet, dass** eine zweite Filtereinheit (72) zur Glättung der Änderung der von der Stromverstärkungsberechnungseinheit (24a - 24d) ausgegebenen zweiten Stromverstärkung zwischen der Stromverstärkungsberechnungseinheit (24a, 24b) und der vierten Strombefehlswertberechnungseinheit (33) angeordnet ist.

## Revendications

1. Dispositif de commande de direction assistée électrique :
une unité d'entrée de couple de braquage (11) destinée à entrer un couple de braquage d'un mécanisme de direction (1) d'un véhicule ;
une unité d'entrée de vitesse angulaire (12) destinée à entrer une vitesse angulaire de rotation du mécanisme de direction (1) ;
une unité d'entrée de vitesse de véhicule (13) destinée à recevoir en entrée la vitesse de véhicule du véhicule ; et
une unité de sortie de valeur de commande de courant d'attaque (10) destinée à délivrer en sortie une valeur de commande de courant d'attaque de façon à commander un moteur qui applique une force d'assistance au mécanisme de direction (1) sur la base des entrées en provenance de l'unité d'entrée de couple de braquage (11), de l'unité d'entrée de vitesse angulaire (12), et de l'unité d'entrée de vitesse de véhicule (13) ;
**caractérisé en ce que** :
l'unité de sortie de valeur de commande de courant d'attaque (10) comprend :
une unité de calcul de valeur de commande différentielle (21) destinée à calculer une valeur de commande différentielle en différentiant le couple de braquage ;
une unité de calcul de gain différentiel (22) destinée à calculer un gain différentiel, qui est un gain par rapport à la valeur de commande différentielle, sur la base du couple de braquage et de la vitesse du véhicule ;
une première unité de calcul de valeur de commande de courant (23) destinée à calculer une première valeur de commande de courant sur la base du couple de braquage et de la vitesse du véhicule ;
une unité de calcul de gain en courant (24a à 24d) destinée à déterminer une sensation de braquage du mécanisme de direction (1) sur la base du couple de braquage et de la vitesse angulaire de rotation, et à calculer un premier gain en courant, qui est un gain par rapport à la première valeur de commande de courant, sur la base du résultat de la détermination ;
une deuxième unité de calcul de valeur de commande de courant (31) destinée à calculer une deuxième valeur de commande de courant en multipliant la valeur de commande différentielle par le gain différentiel ;
une troisième unité de calcul de valeur de commande de courant (32) destinée à calculer une troisième valeur de commande de courant en multipliant la première valeur de commande de courant par le premier gain en courant ; et
une unité de calcul de valeur de commande de courant d'attaque (34) destinée à calculer la valeur de commande de courant d'attaque en ajoutant la deuxième valeur de commande de courant et la troisième valeur de commande de courant.

2. Dispositif de commande de direction assistée électrique, selon la revendication 1, comprenant en outre :
une quatrième unité de calcul de valeur de commande de courant (33) destinée à calculer une quatrième valeur de commande de courant, sur la base de la deuxième valeur de commande de courant;
**caractérisé en ce que** :
l'unité de calcul de gain en courant (24b) détermine la sensation de braquage du mécanisme de direction (1) sur la base du couple de braquage et de la vitesse angulaire de rotation, et calcule un deuxième gain en courant, qui est un gain par rapport à la deuxième valeur de commande de courant, sur la base du résultat de la détermination ;
la quatrième unité de calcul de commande de courant (33) calcule la quatrième valeur de commande de courant en multipliant la deuxième valeur de commande de courant par le deuxième gain en courant ; et
l'unité de calcul de commande de courant d'attaque (34) calcule la valeur de commande de courant d'attaque en ajoutant la quatrième valeur de commande de courant et la troisième valeur de commande de courant au lieu de calculer la valeur de commande de courant d'attaque en ajoutant la deuxième valeur de commande de courant et la troisième valeur de commande de courant.

3. Dispositif de commande de direction assistée électrique, selon la revendication 1, **caractérisé en ce que** ce :
l'unité de calcul de gain en courant (24a) comprend une première partie détermination (71) destinée à déterminer une sensation de braquage qui correspond à chaque couple de braquage et vitesse angulaire de rotation parmi une pluralité de sensations de braquage classées sur la base du couple de braquage et de la vitesse angulaire de rotation, et une première partie détermination de gain en courant (72) destinée à déterminer un premier gain en courant qui correspond au résultat de la détermination sur la base du résultat de la détermination par la première partie détermination (71).

4. Dispositif de commande de direction assistée électrique, selon la revendication 2, **caractérisé en ce que** ce :
l'unité de calcul de gain en courant (24b à 24d) comprend une première partie détermination (71) destinée à déterminer une sensation de braquage qui correspond à chaque couple de braquage et vitesse angulaire de rotation parmi une pluralité de sensations de braquage classées sur la base du couple de braquage et de la vitesse angulaire de rotation, une première partie détermination de gain en courant (72) destinée à déterminer un premier gain en courant qui correspond au résultat de la détermination sur la base du résultat de la détermination par la première partie détermination (71), et une seconde partie détermination de gain en courant (73) destinée à déterminer un second gain courant qui correspond au résultat de la détermination sur la base du résultat de la détermination par la première partie détermination (71).

5. Dispositif de commande de direction assistée électrique, selon la revendication 3 ou la revendication 4, **caractérisé en ce que** ce :
s'il existe plusieurs sensations de braquage qui correspondent au couple de braquage et à la vitesse angulaire de rotation, la première partie détermination (71) obtient une sensation de braquage parmi la pluralité de sensations de braquage en tant que résultat de la détermination selon une priorité définie à l'avance.

6. Dispositif de commande de direction assistée électrique, selon la revendication 5, **caractérisé en ce que** ce :
l'unité de calcul de gain en courant (24c) comprend une seconde partie détermination (74) destinée à déterminer si la sensation de braquage du mécanisme de braquage (1) correspond ou pas à une sensation de braquage spécifique sur la base du couple de direction, de la valeur de commande différentielle, et de la vitesse du véhicule ; et
si on détermine, comme correspondant dans le résultat de la détermination par la seconde partie détermination (74), que l'existence de plusieurs sensations de braquage déterminées par la première partie détermination (71) est vérifiée ou pas, que la sensation de braquage spécifique par la deuxième partie détermination (74) correspond à l'une de la pluralité de sensations de braquage par la première partie détermination (71) est vérifiée ou pas s'il existe plusieurs sensations de braquage, la sensation de braquage qui correspond est déterminée comme étant la sensation de braquage du mécanisme de direction (1) si une sensation de braquage qui correspond existe.

7. Dispositif de commande de direction assistée électrique, selon l'une quelconque des revendications 3 à 6, **caractérisé en ce que** ce :
l'unité de calcul de gain en courant (24a, 24b, 24c) :
détermine la sensation de braquage du mécanisme de direction (1) sur la base d'un second résultat de détermination si un premier résultat de détermination, qui est un résultat de détermination de la première partie détermination (71), et le second résultat de détermination, qui est un résultat de détermination qui suit le premier résultat de détermination, ne sont pas différents ;
détermine la sensation de braquage du mécanisme de direction (1) sur la base du premier résultat de détermination si le premier résultat de détermination et le second résultat de détermination sont différents, et le résultat de détermination identique au second résultat de détermination n'est pas obtenu de manière continue pour un nombre de fois prédéterminé après le second résultat de détermination ; et
détermine la sensation de braquage du mécanisme de direction (1) sur la base du second résultat de détermination si le premier résultat de détermination et le second résultat de détermination sont différents, et le résultat de détermination identique au second résultat de détermination est obtenu de manière continue pour un nombre de fois prédéterminé après le second résultat de détermination.

8. Dispositif de commande de direction assistée électrique selon l'une quelconque des revendications 1 à 7, **caractérisé en ce qu'**une première unité de filtrage (71) destinée à lisser le changement du premier gain en courant délivré en sortie par l'unité de calcul de gain en courant (24a à 24d) est disposée entre l'unité de calcul de gain en courant (24a à 24d) et la troisième unité de calcul de valeur de commande de courant (32).

9. Dispositif de commande de direction assistée électrique selon l'une quelconque des revendications 2 ou 4 à 8, **caractérisé en ce qu'**une seconde unité de filtrage (72) destinée à lisser le changement du second gain en courant délivré en sortie par l'unité de calcul de gain en courant (24a à 24d) est disposée entre l'unité de calcul de gain en courant (24a à 24d) et la quatrième unité de calcul de valeur de commande de courant (33).
